(19) **Europäisches Patentamt / European Patent Office / Office européen des brevets**

(11) **EP 2 552 612 B1**

(12) **FASCICULE DE BREVET EUROPEEN**

(45) Date de publication et mention
de la délivrance du brevet:
**12.09.2018 Bulletin 2018/37**

(21) Numéro de dépôt: **11730338.8**

(22) Date de dépôt: **23.03.2011**

(51) Int Cl.:
***B21B 1/22*** *(2006.01)*          ***B21B 27/00*** *(2006.01)*
***B60R 13/01*** *(2006.01)*          ***B62D 25/20*** *(2006.01)*
***B21D 53/88*** *(2006.01)*

(86) Numéro de dépôt international:
**PCT/FR2011/000164**

(87) Numéro de publication internationale:
**WO 2011/121191 (06.10.2011 Gazette 2011/40)**

(54) **TOLE METALLIQUE A RELIEFS POUR LA REALISATION DE PLANCHERS INDUSTRIELS SUR LESQUELS CIRCULENT DES CHARIOTS; CYLINDRE GRAVE PERMETTANT D'OBTENIR DE TELLES TOLES PAR LAMINAGE**

METALLBLECH MIT RELIEFS ZUR ERZEUGUNG EINES DURCH LASTWAGEN BEFAHRBAREN INDUSTRIELLEN BODENS UND GRAVIERTER ZYLINDER ZUR GEWINNUNG SOLCHER METALLBLECHE DURCH WALZUNG

SHEET METAL PLATE WITH RELIEFS FOR CREATING INDUSTRIAL FLOORING OVER WHICH TRUCKS ARE TO RUN, ENGRAVED CYLINDER FOR OBTAINING SUCH SHEET METAL PLATES BY ROLLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2010 FR 1001364**

(43) Date de publication de la demande:
**06.02.2013 Bulletin 2013/06**

(73) Titulaire: **Constellium Issoire
63500 Issoire (FR)**

(72) Inventeurs:
• **ARSENE, Sylvie
F-38430 Moirans (FR)**
• **FAVIER, Pascale
F-63110 Beaumont (FR)**

(74) Mandataire: **Constellium - Propriété Industrielle
C-TEC Constellium Technology Center
Propriété Industrielle
Parc Economique Centr'Alp
725, rue Aristide Bergès
CS10027
38341 Voreppe (FR)**

(56) Documents cités:
WO-A1-2006/029429     FR-A1- 2 747 948
JP-A- 10 235 424     US-A- 1 738 829

• **"Meetmethode voor piekgeluiden bij laden en lossen // Measurement methods for peak noise when loading and unloading", 11 novembre 2002 (2002-11-11), TNO RAPPORT, NL, PAGE(S) 42PP, XP009143060, le document en entier**

EP 2 552 612 B1

## Description

L'invention concerne une tôle métallique présentant sur une de ses faces une pluralité de motifs en relief disposés de façon périodique, chaque motif étant lui-même constitué d'une ou plusieurs parties saillantes, que nous appellerons « reliefs ». Cette tôle est destinée à la réalisation de planchers, en particulier des planchers de véhicules industriels. La présente invention concerne plus particulièrement les tôles pour planchers de véhicules frigorifiques. Les tôles métalliques permettent de réaliser des planchers moins glissants et plus résistants à l'usure que les planchers réalisés à partir de matière plastique.

Pour des raisons économiques, les tôles métalliques pour planchers sont des tôles laminées en alliage d'aluminium, la passe finale de laminage ayant été effectuée à l'aide d'un cylindre gravé qui porte l'empreinte négative du ou des motifs à réaliser. De par leur procédé de mise en forme, ces tôles présentent en général des reliefs avec des parois sommitales sensiblement planes, parallèles aux faces des tôles, reliées au plan de la tôle par des parois obliques de faible pente.

## ETAT DE LA TECHNIQUE

Il existe déjà sur le marché de nombreux modèles de tôles à motifs répétitifs en relief. Ces motifs sont par exemple décrits dans la norme NF-EN-1386 et sont souvent désignés de manière imagée (damier, grain d'orge, amande, diamant, grain de riz, damier 2, damier 5, ...). Le motif "damier 5", également appelé "quintet", fréquemment utilisé pour réaliser les tôles de planchers industriels, présente un groupe de 5 bosses allongées, de forme demi-ovoïde, parallèles entre elles qui est entouré de quatre groupes identiques entre eux et déduits du premier groupe par une rotation de 90°. Les tôles qui présentent ce motif "quintet" résistent très bien à l'usure mais ont des qualités anti-dérapantes moyennes. Le motif "grain de riz", décrit dans le brevet FR 2 747 948, sur lequel se base le préambule de la revendication 1, également utilisé pour la réalisation de tôles en alliage d'aluminium pour planchers industriels, qui présentent des propriétés d'emploi satisfaisantes, notamment parce qu'elles possèdent une bonne résistance à l'usure et offrent des conditions de contact frottant qui permettent aux piétons de déambuler sans risque de chute par glissade et aux chariots de rouler sans déraper.

Depuis peu, on cherche également à diminuer le bruit généré par des engins roulants, tels que les chariots, qui doivent circuler sur les planchers munis de telles tôles, en particulier les planchers de camions frigorifiques. En effet, en raison de l'encombrement des routes (problème spécialement important en Hollande), les livraisons des magasins d'alimentation se font de plus en plus la nuit, car un seul camion peut livrer un plus grand nombre de magasins. Récemment, le gouvernement des Pays-Bas a émis un décret dans le but de limiter à terme le bruit émis lors des chargements et déchargements de nuit (plus précisément entre 23h et 7h). Dans le but de définir précisément le seuil sonore à ne pas dépasser et d'encourager le maximum de transporteurs à respecter au plus vite les exigences de ce décret, un programme d'actions s'étendant sur plusieurs années, appelé « PIEK programme », a été mis en place. Le terme hollandais « piek » signifie « pic » et indique que c'est le niveau du pic de bruit qui est visé et non le niveau du bruit continu. Dans le cadre de ce programme, l'organisme de recherche indépendant TNO a défini un protocole de mesure de bruit dans différentes configurations. Ce protocole fait l'objet du rapport DGT-RPT-020131, qui a été émis le 11 novembre 2002 par cet organisme. Si l'on suit ce protocole (du moins la partie concernant la circulation sur les planchers de camion, qui se trouve au chapitre 6 de ce rapport), un camion pour lequel, lors des chargements et déchargements, le niveau de pression acoustique à 7,5 mètres du véhicule reste inférieur à 60 dB(A) est considéré comme respectant les exigences dudit décret. Le dB(A) est un décibel pondéré qui constitue une unité du niveau de pression acoustique et qui est utilisé pour mesurer les bruits environnementaux. En effet, comme l'oreille et le cerveau humains interprètent l'intensité d'un son en partie en fonction de sa hauteur tonale, l'intensité du son enregistré est modifiée en fonction d'une courbe de pondération (A) qui a été définie de façon à correspondre de près à la perception de l'oreille humaine.

Si les Pays-Bas sont très avancés sur le sujet, on voit croître dans tous les pays voisins une tendance identique à réglementer les bruits nocturnes émis lors des chargements et déchargements des camions. Ainsi, la ville de Paris et d'autres villes en Europe envisagent d'imposer également une limite sur le bruit des déchargements nocturnes. Certains supermarchés souhaitent aussi réduire le bruit lors des chargements et déchargements. La plupart se réfèrent au protocole de mesure proposé par TNO, au point de le désigner comme la « norme PIEK », qui, si elle est observée, permet d'acquérir une sorte de label de qualité de silence (« Piek Certificaat »).

Dans la pratique, la tôle divulguée par FR 2 747 948, qui présente un ensemble de motifs en relief en forme de grain de riz, s'avère moins bruyante que certaines tôles concurrentes également employées pour la réalisation de planchers de camions frigorifiques, en particulier les tôles "quintet" évoquées ci-dessus, qui s'avèrent très bruyantes.

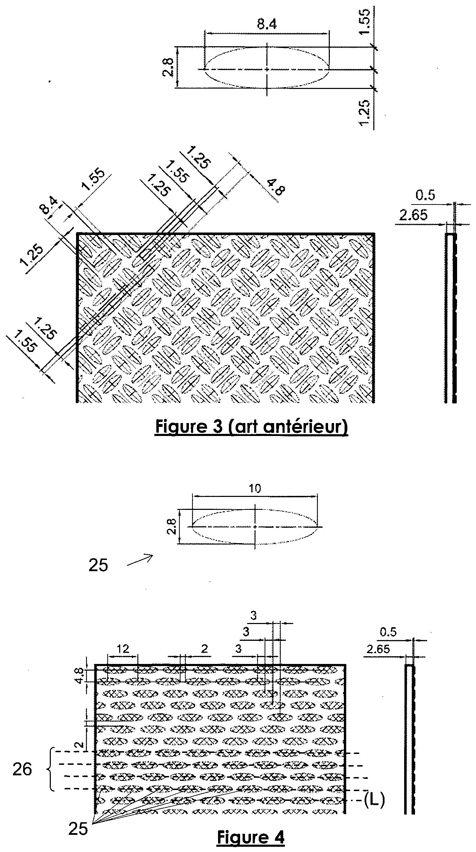

Toutefois, la tôle aux motifs "grain de riz" de FR 2 747 948 ne paraît pas encore entièrement satisfaisante dans la mesure où le niveau de bruit atteint est un peu trop élevé en raison des nouvelles exigences, le seuil à ne pas dépasser devant s'abaisser prochainement. La demanderesse a donc tenté de trouver une solution satisfaisante permettant de proposer une tôle présentant un ou plusieurs motifs en relief, destinée à réaliser des planchers industriels, qui offre non seulement une bonne résistance à l'usure et des conditions de frottement satisfaisantes permettant aux piétons de déambuler sans risque de chute par glissade et aux chariots de rouler sans déraper mais qui permet aussi aux engins roulants tels que les chariots de circuler en générant un bruit significativement plus faible que celui émis par ladite tôle « grain de riz », dont le détail des motifs est illustré en figure 3.

Un premier objet selon l'invention est une tôle métallique pour la réalisation de planchers, en particulier de planchers de véhicules industriels, selon la revendication 1.

La tôle selon l'invention est une tôle métallique destinée à être posée sur le plancher d'un véhicule. Selon la définition courante, une tôle est un produit laminé de section transversale globalement rectangulaire dont l'épaisseur moyenne n'excède pas 1/10ème de la largeur. Le terme "tôle métallique à reliefs" employé ici couvre autant les tôles dites "gravées" que les "tôles reliefs" telles que définies dans la norme EN12258. Le terme "tôle gravée" est un terme général où les motifs peuvent être imprimés en creux ou en relief sur une ou sur les deux faces, ce qui implique autant l'impression, la gravure, l'embossage, voire l'usinage de tels motifs sur une tôle à section transversale parfaitement rectangulaire que le laminage avec passe finale sur cylindre gravé, procédé associé au terme "tôle relief", lequel fait référence à une tôle "imprimée d'un motif en relief sur une face, par laminage".

La tôle selon l'invention présente sur une de ses faces des motifs qui comprennent un ou plusieurs reliefs et qui, telle la maille élémentaire d'un réseau cristallin, se répètent de façon périodique et ordonnée. Un motif est donc un morceau de tôle qui se répète indéfiniment par translation suivant deux directions du plan de la tôle. Ce morceau de tôle peut ne comprendre qu'un relief mais il peut aussi comprendre plusieurs reliefs qui peuvent avoir des formes ou des orientations différentes. Il ne semble pas avantageux d'avoir des reliefs de hauteurs différentes mais cela n'est a priori pas exclu. Pour avoir une résistance à l'usure acceptable dans les conditions pratiques d'utilisation, la hauteur maximale de ces reliefs est comprise entre 0,2 et 1,5 mm. Avantageusement, en particulier pour ce qui concerne les tôles à reliefs en alliage d'aluminium, elle est comprise entre 0,2 et 1,0 mm, de préférence entre 0,3 et 0,8 mm, de préférence encore entre 0,4 et 0,6 mm.

Lesdits motifs se répètent aussi de façon discrète, car une telle configuration est favorable à la propriété anti-dérapante du plancher. En effet, les reliefs se comportent comme des indenteurs qui agissent sur la surface de la semelle ou de la bande de roulement de la roue : sous l'effet du poids du piéton ou du chariot, celle-ci se déforme et « s'enfonce » autour du relief sur une certaine hauteur dont l'ordre de grandeur est un, deux ou trois dixièmes de millimètre. Un relief discontinu favorise, dans la semelle ou la bande de roulement, la formation d'un bourrelet tout autour de sa paroi sommitale, ce qui favorise l' « accrochage » de la semelle, de la bande de roulement ou du bandage de la roue sur le plancher. D'autre part, des motifs qui se répètent de façon discrète facilitent le nettoyage du plancher, l'écoulement des fluides et leur évacuation étant plus aisée. La tôle selon l'invention ne doit donc pas présenter de relief continu.

Comme il est difficile de définir la surface réelle de contact entre ces reliefs et les semelles des piétons déambulant et/ou les bandages ou chemins de roulement des roues de chariots qui circulent sur lesdits planchers, nous allons définir conventionnellement une surface corrélée aux propriétés anti-dérapantes du relief de la tôle, que nous appellerons "surface frottante". Ladite surface résulte de l'intersection dudit relief avec un plan parallèle à la face de la tôle, situé à mi-hauteur, c'est-à-dire à mi-distance du sommet du relief. Une telle définition est liée au phénomène décrit plus haut : le relief se comporte comme un indenteur qui agit sur la surface de la semelle ou de la bande de roulement de la roue. La figure la illustre comment ladite surface frottante est obtenue: la face (11) de la tôle (10) présente un relief (20) en saillie dont la surface sommitale (22) n'est pas forcément plane et parallèle à la face (11) de la tôle. La surface frottante (30) est définie comme étant l'intersection du relief (20) avec un plan (P) parallèle à la face (11) de la tôle et distant de $H_{max}/2$ du sommet (21) du relief (20), la hauteur maximale $H_{max}$ étant la distance entre ledit sommet et la face (11) de la tôle. Les parois (23) du relief sont relativement peu pentues: elles font typiquement avec la face (11) de la tôle un angle inférieur à 45°.

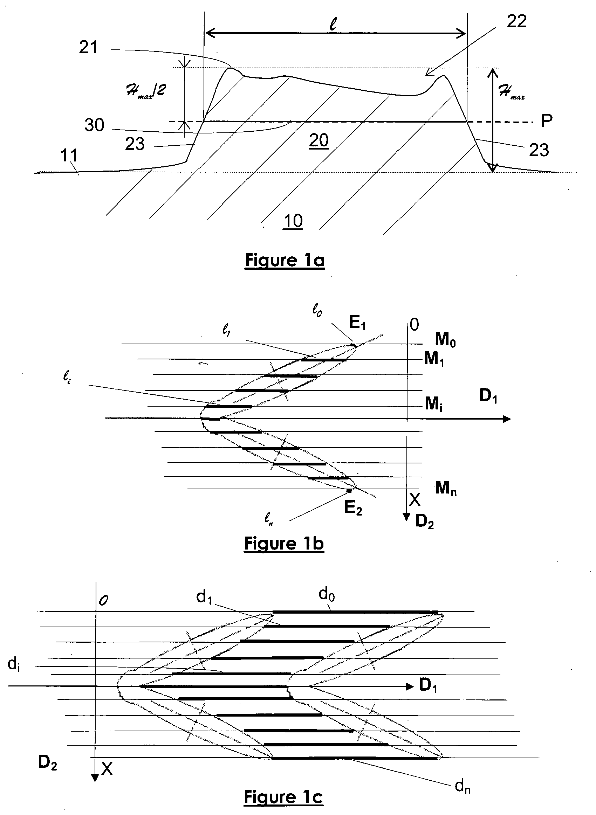

Sur la figure la, la surface frottante s'étend sur une largeur $\ell$. La demanderesse a remarqué qu'il était nécessaire que cette largeur $\ell$ atteigne en moyenne une valeur suffisante pour que le contact se traduise par un effort de frottement efficace: si $\ell$ est trop faible, le matériau de la semelle ou de la bande de roulement se déplace d'un côté ou de l'autre du relief, sans être particulièrement retenu. C'est pourquoi la demanderesse a défini un critère selon lequel, quelle que soit la direction de balayage, la largeur moyenne du relief doit être au moins égale à 0,7 mm. La figure 1b illustre le principe de calcul d'une largeur moyenne mesurée dans une direction donnée ($D_1$): le long de la direction ($D_2$) perpendiculaire à la direction ($D_1$), on définit les extrémités E1 et E2 du relief, dont les coordonnées sont respectivement 0 et X sur l'axe ($D_2$) et on trace n fois entre lesdites extrémités une droite $M_i$ (i=1 à n) parallèle à la direction ($D_1$), qui coupe la surface frottante sur une longueur $\ell_i$. La largeur moyenne du relief, relative à la direction ($D_1$), est donnée par:

$$\bar{l} = \lim_{n \to \infty} \frac{\sum_0^n l_i}{n} .$$ Elle peut bien évidemment être approchée par une moyenne effectuée sur N mesures $\left( \frac{\sum_0^N l_i}{N} \right),$

N étant un entier plus ou moins grand, selon la complexité de la forme de la surface frottante. De préférence, pour améliorer la propriété anti-dérapante de la tôle, la largeur moyenne de la surface frottante dans la direction (D) est supérieure à 1,0 mm, voire supérieure à 2 mm.

La demanderesse a testé de nombreuses tôles présentant des reliefs avec des morphologies et de répartitions différentes. Elle a observé en pratiquant un test de mesure vibratoire décrit ci-après, que les meilleurs résultats étaient obtenus sur les tôles qui avaient des reliefs disposés en une pluralité de groupements alignés, c'est-à-dire en une pluralité de groupements de reliefs au sein desquels chaque relief présente une même forme, une même orientation et un centre de gravité qui se trouve sensiblement sur une droite parallèle à une direction donnée (D), la distance minimale mesurée suivant ladite direction (D) entre deux reliefs voisins d'un même groupement aligné étant toujours inférieure à 6 mm, de préférence 5 mm. Pour caractériser la forme, l'orientation et le centre de gravité d'un relief, ainsi que la distance minimale entre deux reliefs, on peut se référer à nouveau à la surface frottante telle que définie précédemment et illustrée en figure la. La figure 1c illustre deux reliefs voisins alignés de même forme et de même orientation, dont les centres de gravité sont alignés selon la direction $D_1$. Elle illustre le principe de calcul d'une distance minimale mesurée dans une direction donnée ($D_1$): le long de la direction ($D_2$) perpendiculaire à la direction ($D_1$), on définit les projections E1 et E2 des extrémités des reliefs, dont les coordonnées sont respectivement 0 et X sur l'axe ($D_2$) et on trace entre lesdites extrémités n fois une droite $M_i$ (i=1, n) parallèle à la direction ($D_1$). La droite $M_i$ traverse les surfaces frottantes des reliefs, créant des intervalles de longueur di entre deux surfaces frottantes. La distance minimale entre reliefs voisins entre donnée par: $\lim_{n\to\infty} Min(d_i, i = 1,n)$. Bien évidemment, cette valeur peut être approchée par un calcul effectué sur N mesures ($Min(l_i, i = 1,N)$), N étant un entier plus ou moins grand, selon la complexité de la forme de la surface frottante du relief relatif au groupement aligné. On dit que cette distance minimale doit être toujours inférieure à 6 mm, en ce sens que lesdits reliefs d'un même groupement aligné peuvent être répartis non uniformément et que la distance minimale selon la direction (D) entre deux reliefs voisins, si elle peut varier selon les reliefs choisis, ne doit jamais dépasser 6 mm. Les motifs sont de préférence alignés sur une même droite de direction (D). Bien évidemment, la notion de groupement aligné englobe aussi les configurations de reliefs de même forme, de même orientation et dont les centres de gravité sont sensiblement alignés, c'est-à-dire très proches d'une même droite de direction (D), typiquement distants d'1 mm au plus d'une telle droite.

Avantageusement, la direction donnée (D) d'alignement des reliefs des groupements alignés est sensiblement parallèle à la direction globale (Dc) de circulation des chariots sur lesdites tôles. La demanderesse a en effet constaté que les tôles les plus silencieuses étaient celles qui présentaient des groupements alignés selon une direction voisine de la direction globale de circulation des chariots, présentant des reliefs de même forme, de même orientation et proches les uns des autres, avec une distance minimale mesurée selon la direction globale de circulation des chariots, inférieure à 6mm, de préférence inférieure à 5 mm.

La demanderesse est également arrivée à la conclusion que l'"imbrication" dans un même alignement de reliefs de formes différentes pouvait certes avoir un effet esthétique mais semblait pénalisante en ce qui concerne le bruit généré par une roue circulant sur de telles tôles. Il semble donc avantageux de n'avoir qu'une seule forme de relief, qu'une seule orientation de relief par groupement aligné, deux reliefs voisins n'étant pas trop éloignés l'un de l'autre, la distance maximale typique étant donnée par la distance minimale selon (D) entre les surfaces sommitales frottantes de deux reliefs alignés voisins qui doit être inférieure à 6 mm, de préférence 5 mm. Ceci n'interdit pas la possibilité de faire voisiner deux groupements alignés de reliefs de forme et/ou d'orientation différentes, à condition toutefois que les lignes rejoignant leurs centres de gravité respectifs ne soient pas trop proches l'une de l'autre, c'est-à-dire soient typiquement distantes d'au moins un millimètre l'une de l'autre.

Selon l'invention, la tôle présente plus de 3000 reliefs par mètre carré. En-dessous de ce nombre, la tôle perd, selon la morphologie des motifs, ses qualités anti-dérapantes et/ou son aptitude à évacuer les fluides. De plus, lesdits reliefs régulièrement répartis doivent présenter une aire cumulée sur laquelle le frottement peut exercer efficacement un effet anti-dérapant. En définissant la fraction surfacique comme le rapport de la somme des surfaces sommitales frottantes des reliefs d'un motif sur la surface du motif (le motif étant ici défini comme une maille élémentaire du réseau), la tôle présente avantageusement des reliefs qui occupent une fraction surfacique au moins égale à 5 %, de préférence supérieure à 30 %. De préférence, le nombre de reliefs au mètre carré est inférieur à 30 000, de façon à ce que lesdits reliefs présentent une aire de contact suffisante, la surface frottante ayant une aire typiquement supérieure à 3 $mm^2$.

Avantageusement, la tôle présente au moins une pluralité de groupements alignés dont les reliefs présentent une plus grande dimension faiblement inclinée par rapport à la direction (D), faisant typiquement un angle constant inférieur à 30° avec ladite direction (D). Si l'angle est différent de 0°, typiquement supérieur à 2°, il est possible, en décalant les centres de gravité respectifs selon la direction (D), de placer deux groupements alignés de reliefs identiques très proches les uns des autres et d'avoir ainsi une plus grande densité surfacique de reliefs. Si l'angle est voisin de 0, typiquement inférieur à 2°, les reliefs présentent une plus grande dimension orientée selon la direction (D) et celle-ci est de préférence supérieure à 16 mm.

Un deuxième mode de réalisation de tôles à reliefs selon l'invention est une tôle qui comprend au moins une première pluralité de groupements alignés dont les reliefs présentent une plus grande dimension inclinée selon un angle $\alpha$ par rapport à la direction (D) et une deuxième pluralité de groupements alignés dont les reliefs présentent une plus grande dimension inclinée selon un angle - $\alpha$ par rapport à la direction (D). Dans une variante préférée, ladite première pluralité de groupements alignés et ladite deuxième pluralité de groupements alignés sont disposées de telle sorte que deux groupements alignés voisins, appartenant chacun à une pluralité de groupements alignés différente, sont symétriques l'un de l'autre par rapport à un axe de direction (D).

De préférence, les tôles à reliefs selon l'invention sont des tôles laminées en alliage d'aluminium qui présentent sur une de leurs faces une pluralité de "reliefs", disposés de façon périodique, discrète et ordonnée, lesdits reliefs étant en forme de bosses allongées que nous assimilerons à des demi-ovoïdes. Même si, pour caractériser leur géométrie, on se réfère par la suite à des notions telles que le petit axe et le grand axe d'une ellipse, ces demi-ovoïdes ne sont pas à proprement parler des demi-ellipsoïdes puisque la jonction au plan de la tôle est tangentielle au dit plan. Avantageusement, sur de telles tôles laminées, les reliefs allongés en forme de demi-ovoïdes ont une forme typique, où le rapport du grand axe sur le petit axe est compris entre 2 et 15, de préférence entre 5 et 10. Il est avantageux de choisir des tôles laminées pour lesquelles la direction globale (D) de circulation correspond à la direction de laminage (L), la tôle ayant une largeur au moins égale à celle du plancher du véhicule et ayant la longueur laminée voulue permettant de constituer d'une seule pièce ledit plancher. La hauteur maximale des reliefs est comprise entre 0,2 mm et 1,0 mm, de préférence entre 0,3 mm et 0,8 mm, et encore plus préférentiellement entre 0,4 mm et 0,6 mm. Avantageusement, la tôle est en un alliage appartenant au groupe regroupant les alliages d'aluminium des séries 5xxx, 6xxx selon la désignation de l'Aluminum Association ainsi que les alliages de la série 7xxx, comprenant moins de 0,4 % Cu.

Dans une forme de réalisation, la tôle laminée en alliage d'aluminium présente au moins une pluralité de groupements alignés de demi-ovoïdes faiblement inclinés par rapport à la direction de laminage, faisant typiquement un angle constant inférieur à 30° avec ladite direction de laminage. Si l'angle est sensiblement différent de 0°, typiquement supérieur à 2°, il est possible de placer côte à côte deux groupements alignés de reliefs identiques ou encore deux groupements de reliefs orientés symétriquement par rapport à la direction de laminage, puis, en décalant les centres de gravité respectifs selon la direction de laminage, de régler la distance entre groupements alignés de telle sorte que l'on obtienne une densité surfacique de reliefs supérieure à celle qui aurait pu être obtenue avec des reliefs simplement alignés suivant la direction de laminage. Nous avons vu précédemment que les reliefs voisins d'un même groupement aligné devaient être distants de moins de 6 mm, de préférence de moins de 5 mm, suivant la direction globale, c'est-à-dire suivant la direction de laminage. Si l'angle est proche de 0°, typiquement inférieur à 2°, les demi-ovoïdes présentent leur grand axe orienté selon la direction de laminage, ledit grand axe est de préférence supérieur à 16 mm et les reliefs voisins d'un même groupement aligné sont distants de moins de 6 mm, de préférence de moins de 5 mm, suivant la direction de laminage. De plus, en ce qui concerne les tôles laminées, la distance entre reliefs est de préférence supérieure à 2 mm environ pour que les reliefs puissent être bien formés au cours de la dernière passe de laminage.

Dans un mode de réalisation, la tôle ne comporte que des groupements alignés de demi-ovoïdes orientés suivant la direction de laminage, deux demi-ovoïdes voisins étant distants l'un de l'autre d'une distance comprise entre 2 et 6 mm dans la direction de laminage. Typiquement, la distance entre les axes des groupements alignés est au moins égale au petit axe de la surface frottante (assimilée à une ellipse) du relief augmentée de 2 mm. De préférence, elle est comprise entre 3 mm et 15 mm. Avantageusement, les groupements alignés sont décalés les uns par rapport aux autres de telle sorte que les centres de gravité des reliefs décrivent, dans le sens travers, une ligne brisée, le décalage $\Delta$ suivant la direction de laminage (L) entre les sommets de la ligne brisée restant inférieur ou égal au grand axe du demi-ovoïde. On peut également décrire le réseau des reliefs de la tôle par une maille élémentaire qui a la forme d'un chevron dont l'axe de symétrie est parallèle à la direction de laminage (L) et qui comprend 2n reliefs en forme de demi-ovoïdes, n étant un entier supérieur à 1, typiquement voisin de 3, disposés ainsi: un relief sur l'axe de symétrie, (n-1) reliefs régulièrement répartis de part et d'autre de l'axe de symétrie et un demi-relief à chaque extrémité, le décalage suivant la direction de laminage (L) entre les centres de gravité de deux reliefs voisins étant égal à $\Delta$/n.

Dans une autre forme de réalisation, la tôle comprend des groupements alignés desdits reliefs de forme demi-ovoïde inclinés selon un angle $\alpha$ par rapport à la direction de laminage (L) et des groupements alignés de reliefs de même forme demi-ovoïde inclinés selon un angle - $\alpha$ par rapport à la direction de laminage (L).

Dans une autre forme de réalisation, la tôle comprend une première pluralité de groupements alignés de reliefs ayant une première forme demi-ovoïde allongée dans le sens (L), une deuxième pluralité de groupements alignés de reliefs ayant une deuxième forme demi-ovoïde et inclinés selon un angle $\alpha$ par rapport à la direction de laminage (L) ainsi qu'une troisième pluralité de groupements alignés de reliefs de même deuxième forme demi-ovoïde inclinés selon un angle - $\alpha$ par rapport à la direction de laminage (L), lesdites pluralités de groupements alignés étant disposées de telle sorte que trois groupements alignés voisins appartiennent respectivement à la deuxième, à la première et à la troisième pluralité de groupements alignés, le deuxième et le troisième étant symétriques l'un de l'autre par rapport à un axe de direction (D), le premier étant situé sur ledit axe de symétrie.

Dans une autre forme de réalisation, la tôle présente sur une de ses faces une pluralité de "reliefs", disposés de façon périodique, discrète et ordonnée, lesdits reliefs ayant la forme globale d'un chevron, typiquement composé de deux ailes en V élancées (élancement semblable à celui des semi-ovoïdes, c'est-à-dire, compris entre 2 et 15) réunies par un apex sensiblement circulaire dont le diamètre est proche de l'épaisseur moyenne des dites ailes. Il peut s'agir soit d'un chevron dont l'axe de symétrie est parallèle au sens de laminage (L), l'angle entre les deux ailes du chevron étant de préférence inférieur à 60°, soit d'un chevron dont l'axe de symétrie est perpendiculaire au sens de laminage (L), l'angle entre les deux ailes du chevron étant de préférence supérieur à 120°. Dans l'une ou l'autre de ces configurations géométriques, les ailes sont faiblement inclinées par rapport à la direction (D). Avantageusement, lesdits reliefs en forme de chevrons sont disposés en groupements alignés de reliefs de même forme et de même orientation, la distance minimale entre deux reliefs voisins d'un même groupement, mesurée suivant ladite direction de laminage, étant inférieure à 6 mm.

Avantageusement, la tôle présente une alternance de groupements alignés de chevrons orientés dans des sens différents,. Par exemple, pour des chevrons ayant un axe de symétrie parallèle au sens de laminage (L), l'angle entre les deux ailes du chevron étant de préférence inférieur à 60°, on fait alterner des groupements alignés de chevrons orientés vers l'avant avec des groupements alignés de chevrons orientés vers l'arrière, comme illustré dans l'exemple 2. On peut également, pour des chevrons ayant un axe de symétrie perpendiculaire au sens de laminage (L), l'angle entre les deux ailes du chevron étant de préférence supérieur à 120°, faire alterner des groupements alignés de chevrons orientés vers la gauche avec des groupements alignés de chevrons orientés vers la droite, comme illustré dans l'exemple 5. Le dernier exemple montre que lesdits chevrons, si leurs centres de gravité sont décalés d'une demi-longueur, peuvent avantageusement s'imbriquer les uns dans les autres.

Une généralisation possible, incluant les semi-ovoïdes allongés peu inclinés par rapport à (L) et les chevrons ayant un axe de symétrie perpendiculaire au sens de laminage (L) décrits plus haut, peut être effectué en décrivant un relief regroupant n semi-ovoïdes d'élancement typiquement compris entre 2 et 15, réunis par (n-1) sommets communs, n étant un entier compris typiquement entre 1 et 10, inclinés alternativement d'un angle α et d'un angle -α par rapport à la direction de laminage, α étant de préférence inférieur à 30°.

Avantageusement, les tôles présentent des reliefs dont la morphologie, le nombre et la disposition sont tels que, en appliquant à ladite tôle un test de mesure vibratoire particulier, décrit en détail ci-après, le niveau de vitesse vibratoire pondéré A (Lv$_A$ dans le domaine de fréquences 20 Hz - 5 kHz est inférieur à - 67,5 dB(A), si l'on fait circuler sur ladite tôle une roue thermoplastique à bandage en caoutchouc de dureté Shore A typiquement comprise entre 70 et 80, de largeur typiquement comprise entre 25 mm et 35 mm, de diamètre 10 cm et dont le bandage offre typiquement une surface de contact sensiblement cylindrique de rayon 5 cm sur au moins 2 mm, ladite roue circulant avec une vitesse voisine de 1 m/s en suivant une direction globale (Dc) de circulation. De préférence, on choisira des tôles telles que ledit niveau de vitesse vibratoire pondéré A est inférieur à - 68,0 dB(A), de préférence encore inférieur à - 69,0 dB(A).

Ledit test de mesure vibratoire est effectué dans les conditions expérimentales suivantes:

i) on se munit d'un échantillon de tôle de longueur au moins 30 cm dans ladite direction globale (Dc) de circulation;
ii) on utilise un banc d'essai comprenant:

ii1) un chariot instrumenté comprenant une planche munie de trois roues: une roue arrière, située au milieu, à proximité du bord arrière de la planche, et deux roues avant, de préférence identiques à la roue arrière, situées à proximité du bord avant de la planche, et à proximité de chaque bord latéral, ledit chariot instrumenté étant chargé de 12,5 kg par roue et comprenant un accéléromètre monté au niveau du support de l'axe de la roue arrière;
ii2) un porte-échantillon, apte à recevoir ledit échantillon de tôle et à le maintenir fermement, tout en encadrant une piste longue d'au moins 30 cm qui présente la face supérieure munie de reliefs au passage de ladite roue arrière;
ii3) deux pistes latérales lisses qui entourent ledit porte-échantillon et qui sont destinées au passage des roues avant à la même altitude que la roue arrière;

iii) on met en mouvement le chariot de telle sorte que, dès l'arrivée de la roue arrière sur ladite bande de morceau de tôle, le chariot est animé d'une vitesse voisine de 1 m/s,
iv) pendant toute la traversée de la roue arrière sur ladite piste, on enregistre comme signal temporel l'accélération mesurée par ledit accéléromètre, on effectue une analyse fréquentielle dudit signal temporel et on calcule le niveau de vitesse vibratoire pondéré A (LvA) dans le domaine de fréquences 20 Hz - 5 kHz.

Ledit niveau de vitesse vibratoire pondéré A dans un domaine de fréquences [f1, f2] est donné par la formule :

$$Lv_A = 10 \log_{10}\left[\int_{f_1}^{f_2} \frac{V(f)^2}{V_0^{\,2}}\, pond_A(f)^2\, df\right],$$

où

- $V_0$ est une vitesse de référence, ici égale à 1 m/s,
- V(f) est le spectre de la vitesse vibratoire obtenu à partir de l'enregistrement du signal temporel de l'accélération et
- $pond_A(f)$ est la courbe de pondération fréquentielle A définie dans la norme EN61672-1

Pour caractériser les performances des tôles, la demanderesse a en effet effectué des essais acoustiques selon un protocole voisin du protocole décrit au § 6 du rapport DGT-RPT-020131 de TNO. Dans une remorque frigorifique, plusieurs types de chariots ont été utilisés pour permettre de quantifier les niveaux sonores engendrés par le roulement desdits chariots sur le plancher à reliefs de la remorque. Ce plancher était constitué d'une tôle en aluminium à reliefs en forme de grain de riz. L'analyse du rayonnement acoustique dans la remorque a montré que le niveau sonore global pondéré A est essentiellement dû à trois facteurs :

- la vibration propre du chariot dès qu'il est mis en mouvement ;
- la vibration du plancher dû au passage des roues sur les reliefs ;
- la vibration du chariot induite par le passage des roues sur les reliefs.

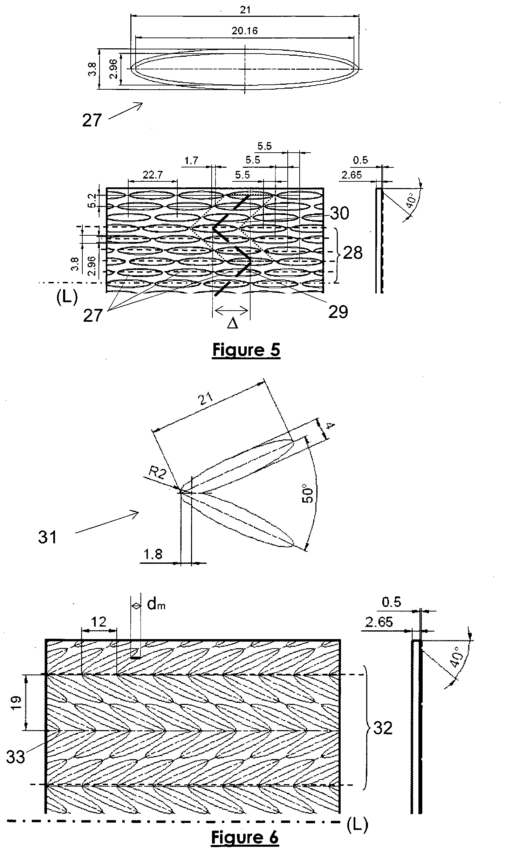

La demanderesse a pu constater que, si on utilise un chariot semblable à celui illustré en figure 6.2 du rapport DGT-RPT-020131 de TNO, seuls les deux derniers facteurs contribuent au bruit.

La demanderesse a pu conclure de cette analyse que, de façon surprenante, l'émission sonore liée au roulement sur un plancher à reliefs de chariots semblables à celui illustré en figure 6.2 du rapport DGT-RPT-020131 de TNO, dépendait presque uniquement de l'effet des vibrations induites par le roulement des roues sur les reliefs, et qu'il suffisait par conséquent de mesurer les accélérations provoquées sur les axes des roues des chariots pour caractériser la qualité faiblement sonore d'un plancher. Dans la pratique, la mesure des accélérations peut se faire au niveau du plancher du chariot, au voisinage du support d'un axe de roue.

La demanderesse a tenté de définir cette aptitude à émettre des signaux sonores de faible intensité par des critères généraux purement géométriques mais ses tentatives sont restées infructueuses car des critères purement géométriques conduisent à une définition restrictive de l'invention. Une telle aptitude à émettre des signaux sonores de faible intensité ne peut en effet pas se résumer, par exemple, à une distance minimale entre reliefs qui empêcherait la roue de toucher en aucun moment la face de la tôle entre deux reliefs: premièrement, il n'y pas de raison d'empêcher le chariot de rouler directement sur la face de la tôle; deuxièmement, étant données les géométries courantes des roues de chariot, cela imposerait des distances entre reliefs très faibles, tellement faibles que ces tôles ne pourraient être obtenues par laminage. De plus, la cinétique de la roue, la direction et l'intensité de sa vitesse au moment où elle arrive au contact d'un relief, joue un rôle très important qu'il n'est possible de prendre en compte qu'au cas par cas, selon la forme et la disposition des reliefs de la tôle concernée.

Par contre, forte du constat précédent, la demanderesse a développé, pour caractériser la qualité faiblement sonore ou "silencieuse" d'une tôle à reliefs, un test de mesure vibratoire, qui est effectué sur un échantillon de tôle à relief de petite dimension et qui est moins coûteux et plus rapide à mettre en place qu'un ensemble de mesures acoustiques impliquant la circulation de chariots sur un plancher de camion frigorifique, tel le test de mesures sonores imposé par le protocole TNO. La valeur caractéristique de la qualité "silencieuse" de la tôle, lorsqu'elle est en présence de chariots qui circulent dessus, est le niveau de vitesse vibratoire pondéré A dans le domaine de fréquences 20 Hz - 5 kHz qui résulte de la mesure des accélérations enregistrées sur le support de l'axe d'une roue de chariot circulant suivant une direction globale (Dc) sur ladite tôle, mesure effectuée pendant un certains laps de temps, typiquement 250 ms, qui correspond au passage de la roue sur une longueur correspondant à au moins cinq motifs, de préférence au moins dix motifs, typiquement de l'ordre de 25 cm. En pratique, l'accéléromètre peut être placé sur le support de roue ou, au voisinage proche de celui-ci, en un endroit qui est plus facilement accessible et où l'accéléromètre est plus facile à fixer. Il est à noter que le test de mesure vibratoire mis au point dans le cadre de la présente invention donne une valeur qui dépend d'une part de la direction de circulation (Dc) choisie et d'autre part de la nature de la roue de chariot employée, en particulier de la géométrie de la surface de contact entre la roue et le plancher, de la nature des matériaux qui constituent ladite roue, et de ses conditions de chargement. Il est bien évident que les tôles ne peuvent être comparées que si le test a été réalisé avec le même type de roue.

En mettant en oeuvre ce test sur la tôle à motifs "grains de riz" telle que décrite par FR 2 747 948 et illustrée en figure 3, et en employant un chariot proche de celui du protocole TNO et muni de roues, dites "semi-dures", en matière thermoplastique et à bandage en caoutchouc gris élastique, de dureté Shore A typiquement comprise entre 70 et 80, de largeur typiquement comprise entre 25 mm et 35 mm, de diamètre 100 mm et dont le bandage offre une surface de contact sensiblement cylindrique de rayon 5 cm sur au moins 2 mm, et en faisant circuler ce chariot dans la direction (Dc) qui correspond à la direction de laminage de la tôle, on trouve un niveau de vitesse vibratoire pondéré A égal à -63,5 dB(A). On dit qu'elle offre une surface de contact sensiblement cylindrique de rayon 5 cm sur au moins 2 mm, en ce sens que, à l'état libre de contraintes et au niveau du contact, la périphérie du bandage de la roue présente de part et d'autre du plan médian de la roue, perpendiculaire à l'axe de ladite roue, un rayon courbure de 5 cm dans tout plan sécant, parallèle au dit plan médian et distant de celui-ci jusqu'à un valeur au moins égale à 1 mm et un rayon de courbure très grand, typiquement supérieur à 1 m, dans un plan perpendiculaire au dit plan sécant.

En mettant en oeuvre ce test avec la même roue circulant sur des tôles à reliefs telles que celles présentées dans les exemples 1 à 3 ci-après, on constate que celles-ci donnent des performances meilleures, caractérisées par des valeurs de niveau de vitesse vibratoire pondéré A inférieures à - 67,5 dB(A). Des études acoustiques sur planchers de camions munis de ces tôles ont confirmé que, donnant des résultats meilleurs que ceux obtenus avec la tôle "grains de riz" de la figure 3, elles répondaient parfaitement aux critères de la "norme PIEK".

Les conditions expérimentales précises du test de mesure vibratoire sont les suivantes:

a) l'échantillon sur lequel les mesures sont effectuées est un morceau de tôle à relief de dimensions 200*300 mm; la plus grande dimension correspond à la direction de circulation (Dc).

b) on utilise un banc d'essai comprenant:

b1) un chariot instrumenté comprenant une planche en aggloméré de dimensions 480*440*19 mm, munie de trois roues: une roue arrière située au milieu, à proximité (typiquement 5 cm) du bord arrière de la planche, et deux roues avant situées latéralement, à proximité (typiquement 45 mm du bord latéral correspondant et 5 cm du bord avant de la planche). Le chariot instrumenté est chargé de 12,5 kg par roue. On se trouve ainsi dans des conditions de chargement proches du chariot du protocole TNO qui est illustré en figure 6.2 du rapport DGT-RPT-020131: il possède 4 roues, en plus de son poids propre, il est chargé d'un sac de sable dont le poids de 25 kg est réparti sur l'ensemble de la surface du chariot. Le chariot instrumenté est muni d'un accéléromètre monté sur la planche dudit chariot, au niveau du pied du support de l'axe de la roue arrière; typiquement sur la face supérieure de la planche, au droit du support de la roue. Les roues sont toutes trois de même dimension et, de préférence, de même nature même si seule la roue arrière est instrumentée et circule sur la tôle. Pour caractériser la propriété faiblement sonore de la tôle, nous avons choisi les roues qui se sont révélées les moins bruyantes dans nos tests, de façon à rendre nos tests plus discriminants: il s'agit de roues dites «semi-dures » , thermoplastiques à bandage en caoutchouc de dureté Shore A typiquement comprise entre 70 et 80, de largeur typiquement comprise entre 25 mm et 35 mm, de diamètre 100 mm et dont le bandage offre une surface de contact sensiblement cylindrique de rayon 5 cm sur au moins 2 mm.

b2) un porte-échantillon, comprenant un support plan apte à recevoir ledit morceau de tôle et deux étaux latéraux aptes à serrer les côtés dudit morceau de tôle, les surfaces de recouvrement étant telles que, combinées aux forces de serrage exercées par lesdits étaux, elles imposent aux côtés de l'échantillon des conditions de fixation par encastrement, lesdits étaux étant disposés de telle sorte qu'ils encadrent une partie de l'échantillon qui est restée découverte et qui constitue une piste longue de 300mm, large de 70 mm environ, offrant sa face supérieure munie de reliefs au passage de ladite roue arrière;

b3) deux pistes latérales lisses qui entourent ledit porte-échantillon et qui sont destinées au passage des roues avant à la même altitude que la roue arrière;

c) on met en mouvement le chariot de telle sorte que, dès l'arrivée de la roue arrière sur ladite piste, le chariot est animé d'une vitesse voisine de 1 m/s, typiquement comprise entre 0,9 et 1,1 m/s. La mise en mouvement peut par exemple être réalisée à l'aide d'une rampe de lancement et d'un dispositif exerçant une traction sensiblement horizontale sur le chariot.

c) pendant toute la traversée de la roue arrière sur la bande de l'échantillon, on enregistre comme signal temporel l'accélération mesurée par ledit accéléromètre et on effectue une analyse fréquentielle dans le domaine 20 Hz - 5 kHz, typiquement avec un pas de 8 Hz, dudit signal temporel et on calcule le niveau de vitesse vibratoire pondéré A dans ledit domaine de fréquences. Le niveau vibratoire pondéré A ($Lv_A$ est donné par la formule :

$$Lv_A = 10 \log_{10}\left[\int_{20Hz}^{5kHz} \frac{V(f)^2}{V_0^2}\, pond_A(f)^2\, df\right]$$

où $V_0$ est la vitesse de référence de 1 m/s, $V(f)$ est le spectre de la vitesse vibratoire obtenu à partir de l'enregistrement du signal temporel de l'accélération et $pond_A(f)$ est la pondération fréquentielle A définie dans la norme EN61672-1.

Si la roue utilisée pour le test de mesure vibratoire est une roue thermoplastique à bandage en caoutchouc de dureté Shore A typiquement comprise entre 70 et 80, de largeur typiquement comprise entre 25 mm et 35 mm, de diamètre 100 mm et dont le bandage offre une surface de contact sensiblement cylindrique de rayon 5 cm sur au moins 2 mm, et si le niveau de vitesse vibratoire pondéré A est inférieur à - 67,5 dB(A), la tôle testée est considérée comme présentant de bonnes propriétés anti-sonores, nettement meilleures que celles de la tôle à grains de riz illustrée en figure 3, et l'on sait ainsi rapidement que cette tôle a de fortes chances de répondre avec succès aux critères de faible sonorité du "PIEK Certificat". Le test est effectué de préférence avec une telle roue, dite "semi-dure", car il semble être plus discriminant que s'il avait été effectué avec une roue plus dure, par exemple une roue pleine en polypropylène, qui est globalement plus bruyante et dont l'emploi est à terme réduit en raison des critères de silence de plus en plus sévères qui risquent d'être appliqués prochainement dans certains pays.

Dans l'application concernée, il existe une direction globale (Dc) selon laquelle la circulation des chariots est plus fréquente et où ils atteignent des vitesses plus élevées. La demanderesse en a conclu qu'il n'était pas nécessaire d'exiger un même niveau de qualité de "silence" dans les autres directions et qu'une tôle à reliefs bien adaptée aux critères de silence du protocole TNO pouvait présenter des propriétés directionnelles, meilleures selon la direction globale de circulation (Dc) que selon les autres directions, en particulier selon la direction perpendiculaire à (Dc). Ainsi, pour les tôles des exemples présentés ci-après, qui satisfont aux critères du "Piek Certificaat", le niveau de vitesse vibratoire pondéré A est inférieur à -62dB pour des roues "semi-dures" qui circulent dans la direction perpendiculaire à (Dc).

Le test de mesure vibratoire peut également être réalisé en utilisant des roues plus dures, par exemple avec des roues pleines en polypropylène, de diamètre 100 mm, de capacité de charge 125 kg, de largeur 35 mm, avec une bande de roulement qui présente une surface de contact sphérique de rayon 5 cm et dont le moyeu est de type « corps plein ». On dit qu'elle offre une surface de contact sphérique en ce sens qu'au niveau du contact et à l'état libre de contraintes, la périphérie de la roue présente des rayons de courbure dans un plan passant par l'axe de la roue et dans le plan perpendiculaire audit axe qui sont tous deux égaux à 5 cm. Pour les tôles des exemples présentés ci-après, le niveau de vitesse vibratoire pondéré A est inférieur à - 49 dB(A) si on fait circuler de telles des roues selon la direction (Dc).

La demanderesse a effectué également des tests de mesure vibratoire avec des roues dures parce que ce sont les roues employées dans le cadre du protocole TNO. Après avoir effectué de nombreuses mesures sur les deux types de roue, elle a constaté que, si la valeur du niveau de vitesse vibratoire était différente selon la roue utilisée, l'ordre hiérarchique des tôles testées n'était globalement pas modifié au regard de leur propriété anti-sonore. Bien évidemment, quelle que soit la roue utilisée, il est nécessaire qu'elle ne soit pas trop usée, c'est-à-dire qu'elle présente un chemin de roulement circulaire, exempt de méplats ou autres défauts géométriques susceptibles de générer des vibrations sur la roue lors de sa rotation.

Selon l'invention, les tôles présentent des groupements alignés disposés de telle sorte que la distance minimale, selon la direction perpendiculaire à la direction donnée (D), entre deux reliefs voisins de deux groupements alignés différents est inférieure à 15 mm, typiquement comprise entre 2 mm et 15 mm.

Un autre objet selon l'invention est l'utilisation d'une tôle telle que décrite précédemment pour réaliser des planchers sur lesquels doivent circuler des chariots selon une direction globale (Dc) de circulation, caractérisée en ce que les lesdits groupements alignés présentent des reliefs dont les centres de gravité sont sensiblement alignés selon une direction donnée (D) sensiblement parallèle à ladite direction globale (Dc) de circulation. Les planchers concernés sont typiquement des planchers de véhicule et, comme ces derniers sont de forme rectangulaire, il existe une direction globale (Dc) selon laquelle la circulation des chariots est plus fréquente et où ils atteignent des vitesses plus élevées. Si la tôle est une "tôle relief" laminée, la direction de laminage (L) coïncide avantageusement avec ladite direction globale (Dc) de circulation.

Plus spécifiquement, un autre objet selon l'invention concerne l'utilisation d'une tôle à reliefs laminée en alliage d'aluminium telle que celle décrite plus haut pour réaliser des planchers de véhicule frigorifique, caractérisée en ce que lesdits groupements alignés de reliefs sont alignés selon la direction de laminage (L) et en ce que ladite tôle à reliefs est placée sur le plancher du véhicule de telle sorte que la direction de laminage coïncide avec la longueur du véhicule. En effet, c'est dans la direction de la longueur du véhicule que les chariots circulent le plus fréquemment et qu'ils peuvent atteindre la vitesse la plus élevée.

Un autre objet selon l'invention est le cylindre gravé utilisé en fin de passe de laminage pour réaliser la tôle selon l'invention, les cavités gravées sur le cylindre présentant les caractéristiques géométriques appropriées, permettant en particulier d'obtenir les groupements alignés de reliefs décrits ci-dessus. Pour le fabricant, la gravure du cylindre de laminage représente un investissement important, surtout s'il veut produire des tôles ou bandes en grande largeur. Il souhaite donc que le cylindre ait une durée de vie aussi longue que possible. D'autre part, pour réduire l'usure du cylindre, assurer une bonne planéité de la tôle et éviter les criques et défauts de surface apparents sur les parties non-gravées de la tôle, il faut que, lors du contact entre la tôle et le cylindre, le métal de la tôle « monte » facilement dans les creux de la gravure du cylindre, ce qui nécessite que la fraction de surface gravée en creux sur le cylindre soit suffisante et le relief pas trop fin. Les dimensions des reliefs telles que définies ci-dessus permettent de réaliser les cavités, typiquement par gravure mécanique, ce qui d'une part permet d'utiliser un acier durci et assure au cylindre une durée de vie accrue, d'autre part permet la réalisation de reliefs aux contours nets. De plus, il est possible d'utiliser des cylindres de grande largeur pour graver des tôles de plus de 2 m de large, voire de plus de 2,5 m de large. Les tôles reliefs ainsi obtenues présentent des reliefs nets sur une surface non gravée bien plane.

La figure 1a illustre schématiquement, en coupe et en vue de face, le détail d'une tôle présentant un relief. Elle a été utilisée pour définir la surface frottante. La figure 1b illustre schématiquement, en vue de dessus, un relief. Elle a été utilisée pour définir la largeur moyenne selon une direction donnée (D1). La figure 1c illustre schématiquement, en vue de dessus, deux reliefs voisins d'un groupement aligné tel que défini ci-dessus, ayant la même forme, la même orientation, et étant alignés suivant la direction D1. Elle a été utilisée pour définir la distance minimale selon la direction (D1).

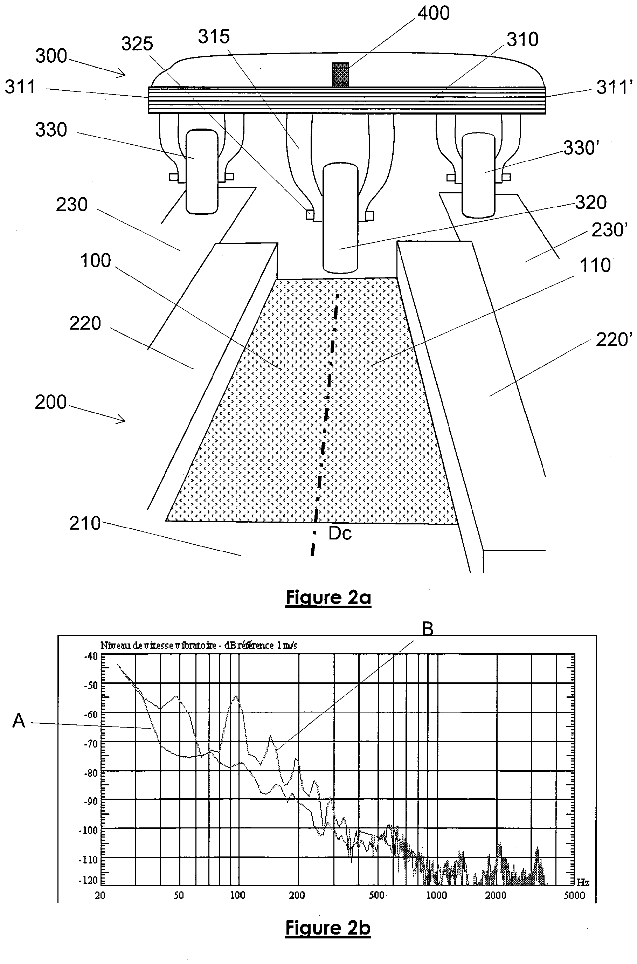

La figure 2a illustre schématiquement une partie du chariot et du dispositif utilisés pour le test de mesure vibratoire. La figure 2b illustre schématiquement un spectre de vitesse vibratoire obtenu après analyse fréquentielle du signal temporel de l'accélération mesuré au niveau de l'axe de la roue de chariot.

La figure 3 illustre, en vue de dessus, une tôle selon l'art antérieur présentant des motifs en forme de grains de riz.

Les figures 4 et 5 illustrent, en vue de dessus, deux variantes d'un mode de réalisation selon l'invention qui est une tôle laminée présentant des groupement alignés de reliefs en forme de demi-ovoïdes allongés dans le sens de laminage.

La figure 6 illustre, en vue de dessus, un autre mode de réalisation selon l'invention, qui est une tôle laminée présentant des groupements alignés de chevrons, où lesdits groupements alignés sont disposés en alternance avec des chevrons orientés vers l'avant et avec des chevrons orientés vers l'arrière.

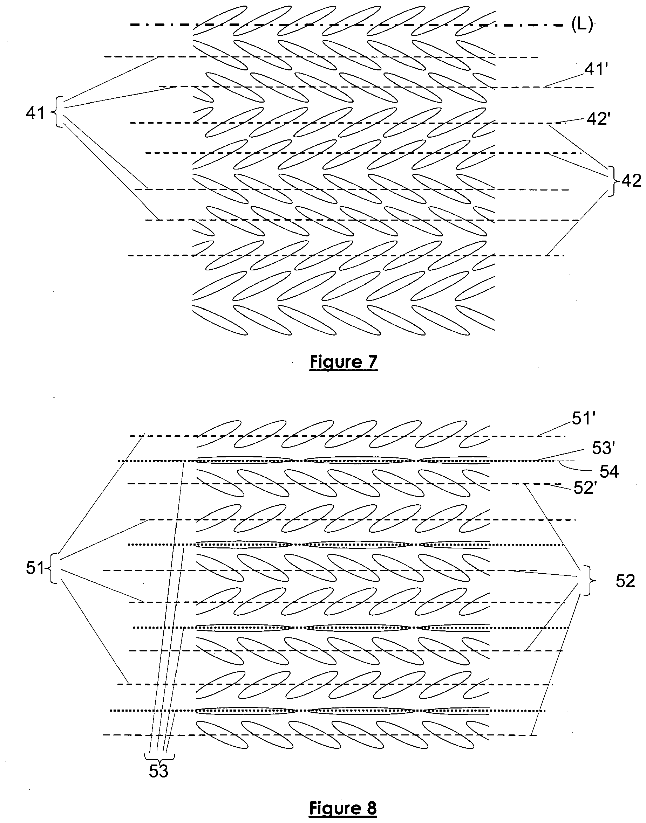

La figure 7 illustre, en vue de dessus, un autre mode de réalisation selon l'invention, qui est une tôle laminée présentant des groupements alignés de demi-ovoïdes dont le grand axe est incliné d'un angle de 25° environ par rapport à la direction de laminage, deux groupements alignés voisins étant symétriques l'un de l'autre par rapport à un axe parallèle à la direction de laminage.

La figure 8 illustre, en vue de dessus, un autre mode de réalisation selon l'invention, où les groupements alignés voisins de demi-ovoïdes inclinés, semblables à ceux de la figure 7, sont séparés par un groupement aligné de demi-ovoïdes orientés selon la direction de laminage.

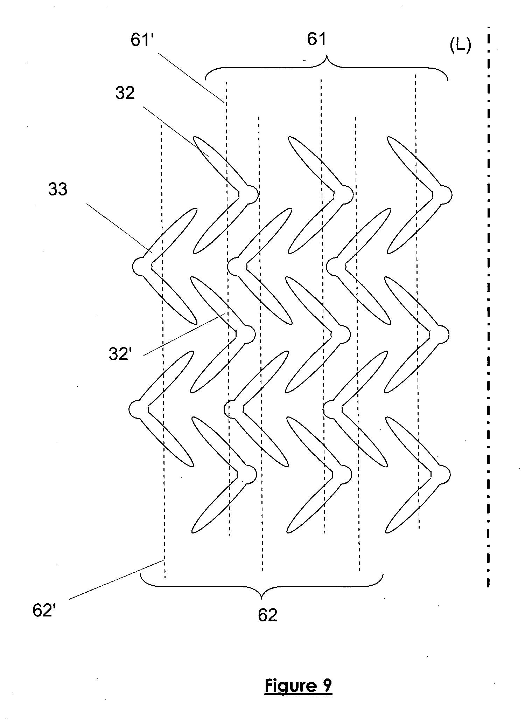

La figure 9 illustre, en vue de dessus, un autre mode de réalisation selon l'invention, qui est une tôle laminée présentant deux pluralités de groupements alignés de chevrons, où lesdits groupements alignés sont disposés en alternance, l'un portant des chevrons orientés vers la droite, l'autre portant des chevrons orientés vers la gauche.

## DISPOSITIF DE MESURE (FIGURES 2a et 2b)

La figure 2a illustre schématiquement, en perspective, l'observateur étant placé dans la direction globale (Dc) de circulation et regardant de l'arrière vers le chariot (300) et le porte-échantillon (200), juste après un test de mesure vibratoire.

L'échantillon (100) sur lequel les mesures sont effectuées est un morceau de tôle à reliefs de dimensions 200*300 mm. La plus grande dimension correspond à la direction de circulation (Dc). Le porte-échantillon (200) comprend un support plan (210) sur lequel est posé l'échantillon et deux étaux latéraux (220, 220') qui serrent les côtés dudit morceau de tôle et encadrent qui une partie de l'échantillon qui est restée découverte et qui constitue une piste (110) large de 70 mm environ, longue de 300 mm, offrant sa face supérieure munie de reliefs au passage de la roue arrière (320) instrumentée.

Le chariot (300) est un chariot instrumenté qui comprend une planche (310) en aggloméré de dimensions 480*440*19 mm, munie de trois roues: une roue arrière (320) située au milieu, à 5 cm du bord arrière de la planche (non illustré pour montrer la roue arrière), et deux roues avant (330, 330') situées latéralement, à 45 mm du bord latéral (311, 311') du chariot et 5 cm du bord avant de la planche (non visible)). Le chariot instrumenté est chargé de 12,5 kg par roue (un sac de sable est placé sur la planche du chariot). Le chariot instrumenté est muni d'un accéléromètre (400), monté sur la planche (310) dudit chariot, au niveau du pied du support (315) de l'axe (325) de la roue arrière (320), ici sur la face supérieure de la planche (310), au droit du support de la roue.

Les roues (310, 320, 320') sont identiques, de préférence neuves ou peu utilisées. De préférence, il s'agit de roues thermoplastiques avec un moyeu à rouleau standard et des bagues en nylon (polyamide 6) entourées d'un bandage en caoutchouc gris élastique de dureté Shore A typiquement comprise entre 70 et 80, de largeur typiquement comprise entre 25 mm et 35 mm, de diamètre 100 mm, le bandage offrant, en l'absence de charge, une surface de contact sensiblement cylindrique de rayon 5 cm sur au moins 2 mm. Plus précisément, nous avons utilisé, pour ces essais de mesure vibratoire, des roues proposées par la société LAG sous la référence 13058G.

Nous avons également effectué des essais avec des roues "dures": ce sont des roues pleines en polypropylène, de diamètre 100 mm, de capacité de charge 125 kg, de largeur 35 mm, avec une bande de roulement qui présente un rayon de courbure transversal de 5 cm et dont le moyeu est de type « corps plein ». Plus précisément, nous avons utilisé, pour ces essais de mesure vibratoire, des roues de la société Radiospares référencées 387-919. Elles se révèlent plus bruyantes que les roues "semi-dures".

Deux pistes latérales lisses (230, 230') entourent le porte-échantillon (200). Elles sont destinées au passage des roues avant (330, 330') à la même altitude que la roue arrière (310). Au cours du test, on exerce une traction sensiblement horizontale sur le chariot de telle sorte que, dès l'arrivée de la roue arrière (310) sur la piste (110), le chariot est animé d'une vitesse voisine de 1 m/s, qui reste proche de cette valeur pendant tout le test (soit 250 ms environ).

Pendant toute la traversée de la roue arrière (310) sur la piste (110), on enregistre comme signal temporel l'accélération mesurée par l'accéléromètre (400), on effectue une analyse fréquentielle dans le domaine 20 Hz - 5 kHz du signal temporel et on calcule le niveau de vitesse vibratoire pondéré A dans ledit domaine de fréquences. La figure 2b illustre un exemple de "spectre de vitesse vibratoire", courbe résultant de l'analyse fréquentielle réalisée à partir des mesures du signal temporel de l'accélération au niveau de l'axe de la roue de chariot, où les courbes indiquent le niveau de vitesse vibratoire en fonction de la fréquence. Les courbes A et B résultent d'une analyse fréquentielle par pas de 8 Hz et servent de base de calcul pour le niveau de vitesse vibratoire pondéré A.

La courbe A est caractéristique d'une roue thermoplastique à bandage en caoutchouc roulant sur une tôle lisse à une vitesse proche de 1 m/s et le niveau de vitesse vibratoire pondéré A calculé est égal à - 83,5 dB(A). La courbe B est caractéristique de la même roue roulant à la même vitesse sur une tôle munie de reliefs correspondant à la modalité particulière de l'exemple 1 illustrée en figure 5. Le niveau de vitesse vibratoire pondéré A calculé est égal à - 71,8 dB(A).

## MODES DE REALISATION PARTICULIERS DE L'INVENTION

### EXEMPLE 1: Tôle avec reliefs allongés alignés suivant (L) (Figures 4 et 5).

Les tôles de cet exemple, dont deux variantes particulières sont illustrées en figure 4 et en figure 5, ne comportent qu'une pluralité de groupements alignés ((26) pour la figure 4, (28) pour la figure 5) de reliefs en forme de demi-ovoïdes ((25) et (27)) orientés suivant la direction de laminage (L), deux demi-ovoïdes voisins étant distants l'un de l'autre d'une distance comprise entre 2 et 9 mm dans la direction de laminage.

Sur la figure 4, nous avons représenté un premier exemple de tôle avec des reliefs symbolisés par leurs surfaces sommitales frottantes. Sur la figure 5, nous avons représenté la tôle autrement, les reliefs étant symbolisés par les deux contours caractéristiques des gravures à réaliser dans le cylindre de laminoir, le contour interne correspondant au fond de gravure et étant considéré comme représentatif de la surface frottante.

Les groupements alignés sont distants (sens travers) d'une valeur (4,8 mm pour la figure 4; 5,2 mm pour la figure 5) qui est au moins égale au petit axe de la surface frottante (assimilée à une ellipse) du relief augmentée de 2 mm (2,8 + 2 pour la figure 4; 2,96 + 2 pour la figure 5).

Les groupements alignés (26, 28) sont décalés les uns par rapport aux autres de telle sorte que les centres de gravité des reliefs décrivent, dans le sens travers, une ligne brisée (29). Le décalage $\Delta$ suivant la direction de laminage (L) entre les sommets de la ligne brisée, égal à 9 mm pour la figure 4 et 16,5 mm pour la figure 5, reste inférieur ou égal au grand axe du demi-ovoïde (10 pour la figure 4; 20,16 pour la figure 5). On peut également décrire le réseau des reliefs de la tôle par la maille élémentaire (30) qui a la forme d'un chevron dont l'axe de symétrie est parallèle à la direction de laminage (L) et qui comprend 6 reliefs en forme de demi-ovoïdes, disposés ainsi: un relief sur l'axe de symétrie du chevron, 2 reliefs régulièrement répartis de part et d'autre de l'axe de symétrie et un demi-relief à chaque extrémité, le décalage entre les centres de gravité de deux reliefs voisins étant égal à $\Delta/3$ (soit 3 mm pour la figure 4 et 5,5 mm pour la figure 5).

Le niveau de vitesse vibratoire pondéré A relatif à la tôle de la figure 4 est égal à - 68,5 dB(A). Le niveau de vitesse vibratoire pondéré A relatif à la tôle de la figure 5 ($d_{min}$ = 1,7 mm) est égal à - 71,8 dB(A). On a également fait varier la distance minimale entre deux reliefs voisins avec une géométrie de relief correspondant à la figure 5. On a observé que le niveau de vitesse vibratoire pondéré A était de -70,8 dB(A) pour une distance de 3,7 mm et de -69,7 dB(A) pour une distance de 8,7 mm. Avec des motifs de même largeur et de longueur 16mm, on a observé que le niveau de vitesse vibratoire pondéré A était de -68 dBA pour une distance de 6 mm.

### EXEMPLE 2: Tôle avec reliefs en forme de chevron alignés suivant (L) (Figure 6)

Les tôles de cet exemple présentent sur une de leurs faces une pluralité (32) de groupements alignés de reliefs ayant la forme globale d'un chevron (31) dont l'axe de symétrie est parallèle au sens de laminage (L). Lesdits reliefs en forme de chevrons sont disposés en groupements alignés de reliefs de même forme et de même orientation, la distance minimale $d_m$ entre deux reliefs voisins d'un même groupement, mesurée suivant ladite direction de laminage, étant égale à 4 mm environ. Dans cet exemple illustré en figure 6, la pluralité (32) de groupements alignés de reliefs en forme de chevron orientés vers l'arrière alterne avec une pluralité de groupements alignés (33) de reliefs en forme de chevron orientés vers l'avant.

Le chevron est formé d'ailes qui se rejoignent au niveau d'une zone de convergence. Pour que cette zone de convergence des ailes soit bien mise en forme au cours du laminage, il est avantageux de d'élargir la gravure du cylindre à ce niveau en perçant un trou cylindrique de diamètre un peu plus élevé que la largeur de la zone de convergence dans la direction du sens de laminage.

Le niveau de vitesse vibratoire pondéré A relatif à la tôle de la figure 6 est égal à - 69,4 dB(A). On a également fait varier la distance minimale entre deux chevrons voisins. On a observé que le niveau de vitesse vibratoire pondéré A était de -68,8 dB(A) pour une distance minimale de 5 mm et de -67,6 dB(A) pour une distance minimale de 6 mm.

**EXEMPLE 3: (Figure 7).**

Les tôles de cet exemple présentent au moins une première pluralité (41) de groupements alignés dont les reliefs présentent une plus grande dimension inclinée selon un angle de 25° par rapport à la direction de laminage et une deuxième pluralité (42) de groupements alignés dont les reliefs présentent une plus grande dimension inclinée selon un angle - 25° par rapport à la direction de laminage. La première pluralité (41) de groupements alignés et la deuxième pluralité (42) de groupements alignés sont disposées de telle sorte que deux groupements alignés voisins ((41') et (42')), appartenant chacun à une pluralité de groupements alignés différente (resp. (41) et (42)), sont symétriques l'un de l'autre par rapport à un axe de symétrie parallèle à la direction de laminage.

**EXEMPLE 4: (Figure 8).**

Les tôles de cet exemple présentent comprennent une première pluralité (53) de groupements alignés de reliefs ayant une première forme demi-ovoïde allongée dans le sens (L), une deuxième pluralité (51) de groupements alignés de reliefs ayant une deuxième forme demi-ovoïde et inclinés selon un angle de 25° environ par rapport à la direction de laminage (L) ainsi qu'une troisième pluralité (52) de groupements alignés de reliefs de même deuxième forme demi-ovoïde inclinés selon un angle - 25° par rapport à la direction de laminage (L). Les pluralités de groupements alignés sont disposées de telle sorte que trois groupements alignés voisins (51', 53', 52') appartiennent respectivement à la deuxième pluralité de groupements alignés (51), à la première pluralité de groupements alignés (53) et à la troisième pluralité de groupements alignés (52). Le deuxième groupement aligné (51') et le troisième groupement aligné (52') sont symétriques l'un de l'autre par rapport à un axe de symétrie (54) parallèle à la direction de laminage (L). Le troisième groupement aligné (53') est situé sur ledit axe de symétrie.

**EXEMPLE 5: Tôle avec reliefs en forme de chevron ouvert alignés suivant (L) (Figure 9)**

Les tôles de cet exemple présentent sur une de leurs faces deux pluralités (61 et 62) de groupements alignés de reliefs ayant la forme globale d'un chevron (resp. 32 et 33) dont l'axe de symétrie est perpendiculaire au sens de laminage (L). Lesdits reliefs en forme de chevrons sont disposés en groupements alignés de reliefs de même forme et de même orientation. Dans le premier groupement aligné (61'), les chevrons (32) sont orientés vers la droite. Dans le deuxième groupement aligné (62'), les chevrons (33) sont orientés vers la gauche. Le centre de gravité du chevron (33) d'un groupement aligné (62') se trouve sur la médiatrice du segment qui rejoint les centres de gravité de deux chevrons (32, 32') d'un groupement aligné (61') voisin. De la sorte, il est possible d'obtenir deux groupements alignés voisins qui soient proches l'un de l'autre.

**Revendications**

1. Tôle métallique (10) pour la réalisation de planchers, en particulier de véhicules industriels, sur lesquels doivent circuler des chariots, ladite tôle présentant sur sa face supérieure une pluralité de motifs, chaque motif comprenant une ou plusieurs parties saillantes (20), appelées "reliefs", lesdits motifs étant disposés de façon périodique, discrète et ordonnée, la hauteur maximale ($H_{max}$) desdits reliefs étant comprise entre 0,2 et 1,5 mm, lesdits reliefs présentant une surface (30), dite "frottante", qui est définie par l'intersection d'un relief avec un plan (P) parallèle à la surface de la tôle et situé à mi-distance du sommet (21) dudit relief et qui présente, quelle que soit la direction selon laquelle elle est mesurée, une largeur moyenne au moins égale à 0,7 mm, la tôle comprenant plus de 3000 reliefs par mètre carré, lesdits reliefs étant disposés en une pluralité de groupements alignés (26, 28, 32, 41, 42, 51, 52, 53), c'est-à-dire une pluralité de groupements de reliefs dans lesquels les reliefs de chacun desdits groupements alignés présentent la même forme, la même orientation et ont leurs centres de gravité sensiblement alignés selon une même direction donnée (D), **caractérisée en ce que** la distance minimale mesurée suivant ladite direction donnée (D) entre deux reliefs voisins d'un même groupement aligné est toujours inférieure à 6 mm, lesdits groupements alignés étant disposés de telle sorte que la distance minimale selon la direction perpendiculaire à la dite direction donnée (D) entre deux reliefs voisins de deux groupements alignés différents est inférieure à 15 mm

2. Tôle selon la revendication 1, **caractérisée en ce que** la distance minimale mesurée suivant ladite direction (D) entre deux reliefs voisins d'un même groupement aligné est toujours inférieure à 5 mm.

3. Tôle selon la revendication 1 ou 2, **caractérisée en ce qu'**elle comprend au moins une pluralité (26, 28, 41, 42, 51, 52, 53) de groupements alignés dont les reliefs présentent une plus grande dimension faiblement inclinée par rapport à la direction (D), faisant typiquement un angle constant inférieur à 30° avec ladite direction (D).

4. Tôle selon la revendication 3, **caractérisée en ce que**, lorsque ledit angle est inférieur à 2°, ladite plus grande dimension desdits reliefs est supérieure à 16 mm.

5. Tôle selon l'une quelconque des revendications 1 à 4, **caractérisée en ce qu'**elle comprend au moins une première pluralité (41) de groupements alignés dont les reliefs présentent une plus grande dimension inclinée selon un angle $\alpha$ par rapport à la direction (D) et une deuxième pluralité (42) de groupements alignés dont les reliefs présentent une plus grande dimension inclinée selon un angle - $\alpha$ par rapport à la direction (D).

6. Tôle selon la revendication 5, **caractérisée en ce que** ladite première pluralité de groupements alignés et ladite deuxième pluralité de groupements alignés sont disposées de telle sorte que deux groupements alignés voisins (41' et 42'), appartenant chacun à une pluralité de groupements alignés différente (respectivement 41 et 42), sont symétriques l'un de l'autre par rapport à un axe de direction (D).

7. Tôle selon l'une quelconque des revendications 1 à 6, **caractérisée en ce que** c'est une tôle laminée en alliage d'aluminium qui présente sur une de ses faces au moins une pluralité de reliefs disposés de façon périodique, discrète et ordonnée, lesdits reliefs ayant la forme d'un demi-ovoïde, le rapport du grand axe sur le petit axe étant typiquement compris entre 2 et 15, de préférence entre 5 et 10.

8. Tôle selon la revendication 7, **caractérisée** en que la hauteur maximale des reliefs est comprise entre 0,2 mm et 1,0 mm, de préférence entre 0,3 mm et 0,8 mm, et encore plus préférentiellement entre 0,4 mm et 0,6 mm.

9. Tôle selon la revendication 7 ou 8, **caractérisée** en que ladite tôle est en un alliage appartenant au groupe regroupant les alliages d'aluminium des séries 5xxx et 6xxx selon la désignation de l'Aluminum Association ainsi que les alliages de la série 7xxx, comprenant moins de 0,4% Cu.

10. Tôle selon l'une quelconque des revendications 7 à 9, **caractérisée en ce qu'**elle est constituée de groupements alignés (26; 28) desdits reliefs de forme demi-ovoïde allongé dans le sens de laminage (L), deux reliefs voisins étant distants l'un de l'autre d'une distance minimale dans la direction de laminage comprise entre 2 et 6 mm, la distance entre les axes des groupements alignés voisins étant comprise entre 3 et 15 mm..

11. Tôle selon la revendication 10, dans laquelle lesdits groupements sont décalés les uns par rapport aux autres de telle sorte que les centres de gravité des reliefs décrivent, dans le sens travers, une ligne brisée (29), le décalage $\Delta$ suivant la direction de laminage (L) entre les sommets de la ligne brisée restant inférieur ou égal au grand axe du demi-ovoïde..

12. Tôle selon l'une quelconque des revendications 7 à 9, **caractérisée en ce qu'**elle comprend des groupements alignés (41) desdits reliefs de forme demi-ovoïde inclinés selon un angle $\alpha$ par rapport à la direction de laminage (L) et des groupements alignés (42) de reliefs de même forme demi-ovoïde inclinés selon un angle - $\alpha$ par rapport à la direction de laminage (L).

13. Tôle selon l'une quelconque des revendications 7 à 9, **caractérisée en ce qu'**elle comprend une première pluralité (53) de groupements alignés de reliefs ayant une première forme demi-ovoïde allongée dans le sens (L), une deuxième pluralité (51) de groupements alignés de reliefs ayant une deuxième forme demi-ovoïde et inclinés selon un angle $\alpha$ par rapport à la direction de laminage (L) ainsi qu'une troisième pluralité (52) de groupements alignés de reliefs de même deuxième forme demi-ovoïde inclinés selon un angle - $\alpha$ par rapport à la direction de laminage (L), lesdites pluralités de groupements alignés étant disposées de telle sorte que trois groupements alignés voisins (51', 53', 52') appartiennent respectivement à ladite deuxième pluralité (51) de groupements alignés, à ladite première pluralité (53) de groupements alignés et à ladite troisième pluralité (52) de groupements alignés, le deuxième groupement aligné (51') et le troisième groupement aligné (52') étant symétriques l'un de l'autre par rapport à un axe (54) de direction (D), le premier groupement aligné (53') étant situé sur ledit axe de symétrie.

**14.** Tôle selon l'une quelconque des revendications 1 à 6, **caractérisée en ce que** c'est une tôle laminée qui présente sur une de ses faces une pluralité de reliefs (31), disposés de façon périodique, discrète et ordonnée, lesdits reliefs ayant la forme globale d'un chevron dont l'axe de symétrie est parallèle au sens de laminage (L), l'angle entre les deux ailes du chevron étant inférieur à 60°.

**15.** Tôle selon la revendication 14, dans laquelle lesdits reliefs (31) en forme de chevrons sont disposés en groupements alignés de reliefs de même forme et de même orientation, la distance minimale ($d_m$) entre deux reliefs voisins d'un même groupement, mesurée suivant ladite direction de laminage, étant inférieure à 6 mm..

**16.** Tôle selon la revendication 15, dans laquelle alternent des groupements de reliefs alignés en forme de chevron orientés vers l'avant avec des groupements alignés de reliefs en forme de chevron orientés vers l'arrière..

**17.** Tôle selon l'une quelconque des revendications 1 à 6, **caractérisée en ce que** c'est une tôle laminée qui présente sur une de ses faces une pluralité de reliefs, disposés de façon périodique, discrète et ordonnée, lesdits reliefs (32, 33) ayant la forme globale d'un chevron dont l'axe de symétrie est perpendiculaire au sens de laminage (L), l'angle entre les deux ailes du chevron étant supérieur à 120°.

**18.** Tôle selon la revendication 17, dans laquelle alternent des groupements (62') de reliefs (33) alignés en forme de chevron orienté vers la gauche avec des groupements (61') alignés de reliefs (32) en forme de chevron orienté vers la droite.

**19.** Tôle selon l'une quelconque des revendications 1 à 6, **caractérisée en ce que** c'est une tôle laminée qui présente sur une de ses faces une pluralité de reliefs, disposés de façon périodique, discrète et ordonnée, lesdits reliefs regroupant n semi-ovoïdes, dont l'élancement est typiquement compris entre 2 et 15, réunis par (n-1) sommets communs, n étant un entier compris typiquement entre 1 et 10, inclinés alternativement d'un angle $\alpha$ et d'un angle -$\alpha$ par rapport à la direction de laminage (L), $\alpha$ étant de préférence inférieur à 30°.

**20.** Tôle selon l'une quelconque des revendications 1 à 19, **caractérisée en ce que** la fraction surfacique occupée par lesdits reliefs est au moins égale à 5 %, de préférence supérieure à 30%.

**21.** Tôle selon l'une quelconque des revendications 1 à 20, destinée à la réalisation de planchers sur lesquels doivent circuler des chariots selon une direction globale (Dc) et **caractérisée en ce que** la morphologie, le nombre et la disposition desdits reliefs sont tels que, en appliquant à ladite tôle le test de mesure vibratoire décrit ci-après, le niveau de vitesse vibratoire pondéré A ($Lv_A$) dans le domaine de fréquences 20 Hz - 5 kHz, est inférieur à - 67,5 dB(A) si la roue utilisée est une roue thermoplastique à bandage en caoutchouc de diamètre 10 cm circulant sur ladite tôle en suivant ladite direction globale (Dc),
ledit test de mesure vibratoire étant effectué dans les conditions expérimentales suivantes:

i) on se munit d'un échantillon de tôle dont la longueur selon ladite direction (Dc) est au moins égale à 30 cm;
ii) on utilise un banc d'essai comprenant:

ii1) un chariot instrumenté comprenant une planche munie de trois roues: une roue arrière, située au milieu, à proximité du bord arrière de la planche, et deux roues avant, de préférence identiques à la roue arrière, situées à proximité du bord avant de la planche, et à proximité de chaque bord latéral, ledit chariot instrumenté étant chargé de 12,5 kg par roue et comprenant un accéléromètre monté au niveau du support de l'axe de la roue arrière;
ii2) un porte-échantillon, apte à recevoir ledit échantillon de tôle et à le maintenir fermement, tout en encadrant une piste longue d'au moins 30 cm qui présente la face supérieure munie de reliefs au passage de ladite roue arrière;
ii3) deux pistes latérales lisses qui entourent ledit porte-échantillon et qui sont destinées au passage des roues avant à la même altitude que la roue arrière;

iii) on met en mouvement le chariot de telle sorte que, dès l'arrivée de la roue arrière sur ladite bande de morceau de tôle, le chariot est animé d'une vitesse voisine de 1 m/s,

iv) pendant toute la traversée de la roue arrière sur ladite piste, on enregistre comme signal temporel l'accélération mesurée par ledit accéléromètre, on effectue une analyse fréquentielle dudit signal temporel et on calcule le niveau de vitesse vibratoire pondéré A (LvA) dans le domaine de fréquences [$f_1$-$f_2$], ledit niveau de vitesse vibratoire pondéré A étant donné par la formule: $Lv_A = 10 \log_{10}\left[\int_{f_2}^{f_1} \dfrac{V(f)^2}{V_0^2} pond_A(f)^2\, df\right]$, où $V_0$ est la vitesse de référence égale à 1 m/s, V(f) est le spectre de la vitesse vibratoire obtenu à partir de l'enregistrement du signal temporel de l'accélération et $pond_A$(f) est la courbe de pondération fréquentielle A définie dans la norme EN61672-1.

**22.** Tôle selon la revendication 21 **caractérisée en ce que** la morphologie, le nombre et la disposition desdits reliefs sont tels que, en appliquant à ladite tôle ledit test de mesure vibratoire, le niveau de vitesse vibratoire pondéré A ($Lv_A$) dans le domaine de fréquences 20 Hz - 5 kHz est inférieur à - 68,0 dB(A), de préférence - 69,0 dB(A), si la roue est une roue thermoplastique à bandage en caoutchouc de diamètre 100 mm qui circule sur ladite tôle en suivant ladite direction globale (Dc).

**23.** Tôle selon la revendication 21 ou 22 **caractérisée en ce que** la morphologie, le nombre et la disposition desdits reliefs sont tels que, en appliquant à ladite tôle ledit test de mesure vibratoire, le niveau de vitesse vibratoire pondéré A ($Lv_A$) dans le domaine de fréquences 20 Hz - 5 kHz obtenu sur une roue thermoplastique à bandage en caoutchouc de diamètre 100 mm qui circule sur ladite tôle en suivant une direction perpendiculaire à ladite direction globale (Dc), est supérieur au niveau de vitesse vibratoire pondéré A dans le même domaine de fréquences, obtenu lorsque la roue circule suivant la direction (Dc).

**24.** Utilisation d'une tôle selon l'une quelconque des revendications 1 à 23 pour réaliser des planchers sur lesquels doivent circuler des chariots selon une direction globale (Dc) de circulation, **caractérisée en ce que** les lesdits groupements alignés présentent des reliefs dont les centres de gravité sont sensiblement alignés selon une droite donnée (D) sensiblement parallèle à ladite direction globale (Dc) de circulation.

**25.** Utilisation d'une tôle à reliefs laminée en alliage d'aluminium selon l'une quelconque des revendications 7 à 23 pour réaliser des planchers de véhicule frigorifique, **caractérisée en ce que** lesdits groupements alignés de reliefs sont alignés selon la direction de laminage (L) et **en ce que** ladite tôle à reliefs est placée sur le plancher du véhicule de telle sorte que la direction de laminage (L) coïncide avec la longueur du véhicule.

**26.** Cylindre gravé utilisé en fin de passe de laminage **caractérisé en ce qu'**il comporte des cavités gravées permettant d'obtenir les reliefs de la tôle selon l'une quelconque des revendications 7 à 23.

**Patentansprüche**

**1.** Metallblech (10) für die Herstellung von Böden, insbesondere von Industriefahrzeugen, auf denen Wagen fahren sollen, wobei das Blech auf seiner Oberseite eine Vielzahl von Mustern aufweist, wobei jedes Muster ein oder mehrere vorspringende Teile (20), sogenannte « Reliefs » umfasst, wobei die Muster periodisch, diskret und geordnet angeordnet sind, wobei die maximale Höhe ($H_{max}$) der Reliefs zwischen 0,2 und 1,5 mm liegt, wobei die Reliefs eine sogenannte reibende Oberfläche (30) aufweisen, die durch den Schnittpunkt eines Reliefs mit einer Ebene (P) definiert ist, welche parallel zur Oberfläche des Blechs verläuft und sich in halber Entfernung vom Scheitelpunkt (21) des Reliefs befindet, und die unabhängig von der Richtung, in der sie gemessen wird, eine mittlere Breite von mindestens 0,7 mm aufweist, wobei das Blech mehr als 3000 Reliefs pro Quadratmeter aufweist, wobei die Reliefs in einer Vielzahl von ausgerichteten Gruppen (26, 28, 32, 41, 42, 51, 52, 53) angeordnet sind, d.h. einer Vielzahl von Reliefgruppen, in denen die Reliefs jeder der ausgerichteten Gruppen die gleiche Form haben, die gleiche Ausrichtung haben und in denen ihre Schwerpunkte im Wesentlichen in der gleichen gegebenen Richtung (D) ausgerichtet sind, **dadurch gekennzeichnet, dass** der in der gegebenen Richtung (D) gemessene Mindestabstand zwischen zwei benachbarten Reliefs der gleichen ausgerichteten Gruppe immer kleiner als 6 mm ist, wobei die ausgerichteten Gruppen so angeordnet sind, dass der Mindestabstand in der Richtung senkrecht zur gegebenen Richtung (D) zwischen zwei benachbarten Reliefs zweier unterschiedlicher ausgerichteter Gruppen weniger als 15 mm beträgt.

**2.** Blech nach Anspruch 1, **dadurch gekennzeichnet, dass** der in der Richtung (D) gemessene Mindestabstand zwischen zwei benachbarten Reliefs der gleichen ausgerichteten Gruppe immer kleiner als 5 mm ist.

**3.** Blech nach Anspruch 1 oder 2, **dadurch gekennzeichnet, dass** es mindestens eine Vielzahl (26, 28, 41, 42, 51, 52, 53) von ausgerichteten Gruppen umfasst, deren Reliefs eine größere Abmessung aufweisen, welche in Bezug auf die Richtung (D) leicht geneigt ist, so dass typischerweise ein konstanter Winkel von weniger als 30° mit der Richtung (D) gebildet wird.

**4.** Blech nach Anspruch 3, **dadurch gekennzeichnet, dass** bei einem Winkel kleiner 2° die größte Abmessung der Reliefs größer als 16 mm ist.

**5.** Blech nach irgendeinem der Ansprüche 1 bis 4, **dadurch gekennzeichnet, dass** es mindestens eine erste Vielzahl (41) von ausgerichteten Gruppen umfasst, deren Reliefs eine größere Abmessung aufweisen, die in einem Winkel $\alpha$ in Bezug auf die Richtung (D) geneigt ist, und eine zweite Vielzahl (42) von ausgerichteten Gruppen umfasst, deren Reliefs eine größere Abmessung aufweisen, die in einem Winkel -$\alpha$ in Bezug auf die Richtung (D) geneigt ist.

**6.** Blech nach Anspruch 5, **dadurch gekennzeichnet, dass** die erste Vielzahl von ausgerichteten Gruppen und die zweite Vielzahl von ausgerichteten Gruppen so angeordnet sind, dass zwei benachbarte ausgerichtete Gruppen (41' und 42'), die jeweils einer unterschiedlichen Vielzahl von ausgerichteten Gruppen (41 bzw. 42) angehören, in Bezug auf eine Richtungsachse (D) zueinander symmetrisch sind.

**7.** Blech nach irgendeinem der Ansprüche 1 bis 6, **dadurch gekennzeichnet, dass** es ein gewalztes Blech aus Aluminiumlegierung ist, das auf einer seiner Seiten mindestens eine Vielzahl von periodisch, diskret und geordnet angeordneten Reliefs aufweist, welche Reliefs eine halbovoide Form haben, wobei das Verhältnis von Hauptachse zu Nebenachse typischerweise zwischen 2 und 15, vorzugsweise zwischen 5 und 10 liegt.

**8.** Blech nach Anspruch 7, **dadurch gekennzeichnet, dass** die maximale Höhe der Reliefs zwischen 0,2 mm und 1,0 mm, vorzugsweise zwischen 0,3 mm und 0,8 mm, und besonders bevorzugt zwischen 0,4 mm und 0,6 mm liegt.

**9.** Blech nach Anspruch 7 oder 8, **dadurch gekennzeichnet, dass** das Blech aus einer Legierung hergestellt ist, die der Gruppe der Aluminiumlegierungen der Serien 5xxx und 6xxx gemäß der Bezeichnung der Aluminium Association sowie der Legierungen der Serie 7xxx angehört, die weniger als 0,4 % Cu enthalten.

**10.** Blech nach irgendeinem der Ansprüche 7 bis 9, **dadurch gekennzeichnet, dass** es aus ausgerichteten Gruppen (26; 28) halbovoider, in Walzrichtung (L) langgestreckter Reliefs besteht, wobei zwei benachbarte Reliefs in Walzrichtung um einen Mindestabstand von 2 bis 6 mm voneinander beabstandet sind, wobei der Abstand zwischen den Achsen der benachbarten ausgerichteten Gruppen zwischen 3 und 15 mm liegt.

**11.** Blech nach Anspruch 10, bei dem die Gruppen so zueinander versetzt sind, dass die Schwerpunkte der Reliefs in Querrichtung eine gestrichelte Linie (29) beschreiben, wobei der Versatz $\Delta$ in Walzrichtung (L) zwischen den Scheitelpunkten der gestrichelten Linie kleiner oder gleich der Hauptachse des Halbovoids ist.

**12.** Blech nach irgendeinem der Ansprüche 7 bis 9, **dadurch gekennzeichnet, dass** es ausgerichtete Gruppen (41) halbovoider Reliefs, die in einem Winkel $\alpha$ zur Walzrichtung (L) geneigt sind, und ausgerichtete Gruppen (42) von Reliefs mit derselben halbovoiden Form umfasst, die in einem Winkel -$\alpha$ zur Walzrichtung (L) geneigt sind.

**13.** Blech nach irgendeinem der Ansprüche 7 bis 9, **dadurch gekennzeichnet, dass** es eine erste Vielzahl (53) von ausgerichteten Reliefgruppen mit einer in der Richtung (L) langgestreckten halbovoiden ersten Form, eine zweite Vielzahl (51) von ausgerichteten Reliefgruppen mit einer halbovoiden zweiten Form, die zur Walzrichtung (L) in einem Winkel $\alpha$ geneigt sind, und eine dritte Vielzahl (52) von ausgerichteten Reliefgruppen mit derselben halbovoiden zweiten Form, die zur Walzrichtung (L) in einem Winkel -$\alpha$ geneigt sind, wobei die Vielzahlen von ausgerichteten Gruppen so angeordnet sind, dass drei benachbarte ausgerichtete Gruppen (51', 53', 52') der zweiten Vielzahl (51) von ausgerichteten Gruppen, der ersten Vielzahl (53) von ausgerichteten Gruppen bzw. der dritten Vielzahl (52) von ausgerichteten Gruppen angehören, wobei die zweite ausgerichtete Gruppe (51') und die dritte ausgerichtete Gruppe (52') in Bezug auf eine Achse (54) der Richtung (D) zueinander symmetrisch sind, wobei die erste ausgerichtete Gruppe (53') auf dieser Symmetrieachse liegt.

**14.** Blech nach irgendeinem der Ansprüche 1 bis 6, **dadurch gekennzeichnet, dass** es ein gewalztes Blech ist, das auf einer seiner Seiten eine Vielzahl von Reliefs (31) aufweist, die periodisch, diskret und geordnet angeordnet sind, wobei die Reliefs die allgemeine Form einer Fischgräte oder eines Chevrons haben, dessen Symmetrieachse parallel zur Walzrichtung (L) verläuft, wobei der Winkel zwischen den beiden Chevronflügeln kleiner als 60° ist.

**15.** Blech nach Anspruch 14, bei dem die chevronförmigen Reliefs (31) in ausgerichteten Gruppen von Reliefs gleicher Form und gleicher Ausrichtung angeordnet sind, wobei der Mindestabstand ($d_m$) zwischen zwei benachbarten Reliefs derselben Gruppe, gemessen in Walzrichtung, weniger als 6 mm beträgt.

**16.** Blech nach Anspruch 5, bei dem sich ausgerichtete Gruppen von chevronförmigen, nach vorne weisenden Reliefs mit ausgerichteten Gruppen von chevronförmigen, nach hinten weisenden Reliefs abwechseln.

**17.** Blech nach irgendeinem der Ansprüche 1 bis 6, **dadurch gekennzeichnet, dass** es ein gewalztes Blech ist, das auf einer seiner Seiten eine Vielzahl von Reliefs aufweist, die periodisch, diskret und geordnet angeordnet sind, wobei die Reliefs (32, 33) die allgemeine Form einer Fischgräte oder eines Chevrons haben, dessen Symmetrieachse senkrecht zur Walzrichtung (L) verläuft, wobei der Winkel zwischen den beiden Chevronflügeln größer als 120° ist.

**18.** Blech nach Anspruch 17, bei dem sich ausgerichtete Gruppen (62') von chevronförmigen, nach links weisenden Reliefs (33) mit ausgerichteten Gruppen (61') von chevronförmigen, nach rechts weisenden Reliefs (32) abwechseln.

**19.** Blech nach irgendeinem der Ansprüche 1 bis 6, **dadurch gekennzeichnet, dass** es ein gewalztes Blech ist, das auf einer seiner Seiten eine Vielzahl von Reliefs aufweist, die periodisch, diskret und geordnet angeordnet sind, wobei die Reliefs n Halbovoide umfassen, deren Schlankheit typischerweise zwischen 2 und 15 liegt und die durch (n-1) gemeinsame Scheitelpunkte verbunden sind, wobei n eine ganze Zahl ist, die typischerweise zwischen 1 und 10 liegt, und die abwechselnd um einen Winkel $\alpha$ und einen Winkel -$\alpha$ in Bezug auf die Walzrichtung (L) geneigt sind, wobei $\alpha$ vorzugsweise kleiner als 30° ist.

**20.** Blech nach irgendeinem der Ansprüche 1 bis 19, **dadurch gekennzeichnet, dass** der von den Reliefs belegte Oberflächenanteil mindestens 5 %, vorzugsweise mehr als 30 % beträgt.

**21.** Blech nach irgendeinem der Ansprüche 1 bis 20 für die Herstellung von Böden, auf denen Wagen in einer allgemeinen Richtung (Dc) fahren sollen, **dadurch gekennzeichnet, dass** die Morphologie, die Anzahl und die Anordnung der Reliefs so gewählt sind, dass bei Anwendung des nachstehend beschriebenen Schwingungsmesstests auf das Blech der A-bewertete Schwingungsgeschwindigkeitspegel ($Lv_A$) im Frequenzbereich 20 Hz - 5 kHz kleiner als -67,5 dB(A) ist, wenn das verwendete Rad ein gummibereiftes thermoplastisches Rad von 10 cm Durchmesser ist, das auf dem Blech in der allgemeinen Richtung (Dc) läuft,
wobei der Schwingungsmesstest unter folgenden Versuchsbedingungen durchgeführt wird:

    i) es wird eine Blechprobe bereitgestellt, deren Länge in der Richtung (Dc) mindestens 30 cm beträgt;
    ii) es wird ein Prüfstand verwendet, umfassend:

        ii1) einen instrumentierten Wagen mit einer Platte, die mit drei Rädern versehen ist: einem Hinterrad, das in der Mitte nahe der Hinterkante der Platte angeordnet ist, und zwei Vorderrädern, die vorzugsweise mit dem Hinterrad identisch sind und nahe der Vorderkante der Platte und nahe jeder Seitenkante angeordnet sind, wobei der instrumentierte Wagen mit 12,5 kg je Rad belastet ist und einen Beschleunigungsmesser aufweist, der an der Hinterradachsenstütze angebracht ist;
        ii2) einen Probenhalter, der in der Lage ist, die Blechprobe aufzunehmen und festzuhalten und dabei eine mindestens 30 cm lange Bahn umgibt, welche die mit Reliefs versehene Oberseite für das Befahren mit dem Hinterrad aufweist;
        ii3) zwei glatte Seitenbahnen, die den Probenhalter umgeben und die für das Befahren mit den Vorderrädern in gleicher Höhe wie das Hinterrad vorgesehen sind;

    iii) der Wagen wird so in Bewegung gesetzt, dass, sobald das Hinterrad auf dem Blechstreifen ankommt, der Wagen sich mit einer Geschwindigkeit nahe 1 m/s bewegt,
    iv) während des gesamten Befahrens der Bahn mit dem Hinterrad wird die von dem Beschleunigungsmesser gemessene Beschleunigung als Zeitsignal aufgezeichnet, eine Frequenzanalyse des Zeitsignals durchgeführt und der A-bewertete Schwingungsgeschwindigkeitspegel (LvA) im Frequenzbereich [$f_1$-$f_2$] berechnet, wobei der A-bewertete Schwingungsgeschwindigkeitspegel gegeben ist durch die Formel

$$Lv_A = 10 \log_{10}\left[\int_{f_2}^{f_1} \frac{V(f)^2}{V_0^2} \, pond_A(f)^2 \, df\right],$$

worin $V_0$ die Referenzgeschwindigkeit von 1 m/s, V(f) das aus der Aufzeichnung des Beschleunigungszeitsignals erhaltene Schwingungsgeschwindigkeitsspektrum und $pond_A$(f) die in der Norm EN61672-1 definierte A-Frequenzbewertungskurve ist.

22. Blech nach Anspruch 21, **dadurch gekennzeichnet, dass** die Morphologie, die Anzahl und die Anordnung der Reliefs so gewählt sind, dass bei Anwendung des Schwingungsmesstests auf das Blech der A-bewertete Schwingungsgeschwindigkeitspegel ($Lv_A$) im Frequenzbereich 20 Hz - 5 kHz kleiner als -68,0 dB(A), vorzugsweise -69,0 dB(A) ist, wenn das Rad ein gummibereiftes thermoplastisches Rad von 100 mm Durchmesser ist, das auf dem Blech in der allgemeinen Richtung (Dc) läuft.

23. Blech nach Anspruch 21 oder 22, **dadurch gekennzeichnet, dass** die Morphologie, die Anzahl und die Anordnung der Reliefs so gewählt sind, dass bei Anwendung des Schwingungsmesstests auf das Blech der A-bewertete Schwingungsgeschwindigkeitspegel ($Lv_A$) im Frequenzbereich 20 Hz - 5 kHz, der an einem auf dem Blech in einer Richtung senkrecht zur allgemeinen Richtung (Dc) laufenden gummibereiften thermoplastischen Rad von 100 mm Durchmesser erhalten wird, größer ist als der A-bewertete Schwingungsgeschwindigkeitspegel im gleichen Frequenzbereich, der erhalten wird, wenn das Rad in der Richtung (Dc) läuft.

24. Verwendung eines Blechs nach einem der Ansprüche 1 bis 23 zur Herstellung von Böden, auf denen Wagen in einer allgemeinen Richtung (Dc) fahren sollen, **dadurch gekennzeichnet, dass** die ausgerichteten Gruppen Reliefs aufweisen, deren Schwerpunkte im Wesentlichen entlang einer gegebenen Geraden (D) ausgerichtet sind, die im Wesentlichen parallel zur allgemeinen Richtung (Dc) verläuft.

25. Verwendung eines mit Reliefs versehenen gewalzten Blechs aus Aluminiumlegierung nach einem der Ansprüche 7 bis 23 zur Herstellung von Kühlfahrzeugböden, **dadurch gekennzeichnet, dass** die ausgerichteten Reliefgruppen in Walzrichtung (L) ausgerichtet sind und dass das mit Reliefs versehene Blech so auf dem Fahrzeugboden angeordnet ist, dass die Walzrichtung (L) mit der Länge des Fahrzeugs übereinstimmt.

26. Gravierter Zylinder, der beim Fertigwalzen verwendet wird, **dadurch gekennzeichnet, dass** er gravierte Hohlräume aufweist, mit denen die Reliefs des Blechs nach einem der Ansprüche 7 bis 23 erzielt werden können.

**Claims**

1. Sheet metal plate (10) for creating flooring, in particular of industrial vehicles, over which trucks are to run, said sheet metal plate having on its upper face a plurality of patterns, each pattern comprising one or several protruding portions (20), called "reliefs", said patterns being arranged in a periodic, discrete and ordered manner, the maximum height ($H_{max}$) of said reliefs being between 0.2 and 1.5 mm, said reliefs having a surface (30), referred to as "friction surface", which is defined by the intersection of a relief with a plane (P) parallel to the surface of the sheet metal plate and located at half the distance from the top (21) of said relief and which has, regardless of the direction according to which it is measured, an average width at least equal to 0.7 mm, the sheet metal plate comprising more than 3,000 reliefs per square metre, said reliefs being arranged in a plurality of aligned groups (26, 28, 32, 41, 42, 51, 52, 53), i.e. a plurality of groups of reliefs wherein the reliefs of each one of said aligned groups have the same shape, the same orientation and have their centres of gravity substantially aligned in one and the same given direction (D), **characterised in that** the minimum distance measured along said given direction (D) between two adjacent reliefs of the same aligned group is always less than 6 mm, said aligned groups being arranged in such a way that the minimum distance along the direction perpendicular to said given direction (D) between two adjacent reliefs of two different aligned groups is less than 15 mm.

2. Sheet metal plate according to claim 1, **characterised in that** the minimum distance measured along said direction (D) between two adjacent reliefs of the same aligned group is always less than 5 mm.

3. Sheet metal plate according to claim 1 or 2, **characterised in that** it comprises at least one plurality (26, 28, 41, 42, 51, 52, 53) of aligned groups of which the reliefs have a larger dimension that is slightly inclined with respect to the direction (D), typically creating a constant angle less than 30° with said direction (D).

4. Sheet metal plate according to claim 3, **characterised in that**, when said angle is less than 2°, said larger dimension of said reliefs is greater than 16 mm.

5. Sheet metal plate according to any of claims 1 to 4, **characterised in that** it comprises at least one first plurality (41) of aligned groups of which the reliefs have a larger dimension inclined according to an angle $\alpha$ with respect to the direction (D) and a second plurality (42) of aligned groups of which the reliefs have a larger dimension inclined according to an angle $-\alpha$ with respect to the direction (D).

6. Sheet metal plate according to claim 5, **characterised in that** said first plurality of aligned groups and said second plurality of aligned groups are arranged in such a way that two adjacent aligned groups (41' and 42'), each belonging to a plurality of different aligned groups (respectively 41 and 42), are symmetrical with one another with respect to an axis of direction (D).

7. Sheet metal plate according to any of claims 1 to 6, **characterised in that** it is a rolled sheet metal plate made of aluminium alloy which has on one of its faces at least one plurality of reliefs arranged in a periodic, discrete and ordered manner, said reliefs having the shape of a half-ovoid, with the ratio of the large axis over the small axis being typically between 2 and 15, preferably between 5 and 10.

8. Sheet metal plate according to claim 7, **characterised in that** the maximum height of the reliefs is between 0.2 mm and 1.0 mm, preferably between 0.3 mm and 0.8 mm, and even more preferably between 0.4 mm and 0.6 mm.

9. Sheet metal plate according to claim 7 or 8, **characterised in that** said sheet metal plate is made from an alloy belonging to the group that includes aluminium alloys of the 5xxx and 6xxx series according to the designation of the Aluminium Association as well as alloys of the 7xxx series, comprising less than 0.4% Cu.

10. Sheet metal plate according to any of claims 7 to 9, **characterised in that** it is comprised of aligned groups (26; 28) of said reliefs of half-ovoid shape elongated in the direction of rolling (L), two adjacent reliefs being distant from one another by a minimum distance in the direction of rolling between 2 and 6 mm, the distance between the axes of the adjacent aligned groups being between 3 and 15 mm.

11. Sheet metal plate according to claim 10, wherein said groups are offset in relation to one another in such a way that the centres of gravity of the reliefs describe, in the transverse direction, a broken line (29), the offset $\Delta$ according to the direction of rolling (L) between the tops of the broken line remaining less than or equal to the large axis of the half-ovoid.

12. Sheet metal plate according to any of claims 7 to 9, **characterised in that** it comprises aligned groups (41) of said reliefs of half-ovoid shape inclined according to an angle $\alpha$ with respect to the direction of rolling (L) and of the aligned groups (42) of reliefs of the same half-ovoid shape inclined according to an angle $-\alpha$ with respect to the direction of rolling (L) .

13. Sheet metal plate according to any of claims 7 to 9, **characterised in that** it comprises a first plurality (53) of aligned groups of reliefs having a first half-ovoid shape elongated in the direction (L), a second plurality (51) of aligned groups of reliefs having a second half-ovoid shape and inclined according to an angle $\alpha$ with respect to the direction of rolling (L) as well as a third plurality (52) of aligned groups of reliefs of the same second half-ovoid shape inclined according to an angle $-\alpha$ with respect to the direction of rolling (L), said pluralities of aligned groups being arranged in such a way that three adjacent aligned groups (51', 53', 52') belong respectively to said second plurality (51) of aligned groups, a said first plurality (53) of aligned groups and a said third plurality (52) of aligned groups, the second aligned group (51') and the third aligned group (52') being symmetrical with one another in relation to an axis (54) of direction (D), the first aligned group (53') being located on said axis of symmetry.

14. Sheet metal plate according to any of claims 1 to 6, **characterised in that** it is a rolled sheet metal plate which has on one of its faces a plurality of reliefs (31), arranged in a periodic, discrete and ordered manner, said reliefs having the global shape of a chevron of which the axis of symmetry is parallel to the direction of rolling (L), the angle between the two wings of the chevron being less than 60°.

15. Sheet metal plate according to claim 14, wherein said reliefs (31) in the shape of chevrons are arranged in aligned groups of reliefs of the same shape and of the same orientation, the minimum distance ($d_m$) between two adjacent reliefs of the same group, measured along said direction of rolling, being less than 6 mm.

16. Sheet metal plate according to claim 15, wherein alternate groups of reliefs aligned in the shape of a chevron oriented towards the front with aligned groups of reliefs in the shape of a chevron oriented towards the rear.

**17.** Sheet metal plate according to any of claims 1 to 6, **characterised in that** it is a rolled sheet metal plate which has on one of its faces a plurality of reliefs, arranged in a periodic, discrete and ordered manner, said reliefs (32, 33) having the global shape of a chevron of which the axis of symmetry is perpendicular to the direction of rolling (L), the angle between the two wings of the chevron being greater than 120°.

**18.** Sheet metal plate according to claim 17, wherein alternate groups (62') of reliefs (33) aligned in the shape of a chevron oriented towards the left with aligned groups (61') of reliefs (32) in the shape of a chevron oriented towards the right.

**19.** Sheet metal plate according to any of claims 1 to 6, **characterised in that** it is a rolled sheet metal plate which has on one of its faces a plurality of reliefs, arranged in a periodic, discrete and ordered manner, said reliefs grouping n half-ovoids, of which the slenderness is typically between 2 and 15, reunited by (n-1) common tops, n being an integer typically between 1 and 10, inclined alternatively by an angle $\alpha$ and by an angle $-\alpha$ with respect to the direction of rolling (L), $\alpha$ being more preferably less than 30°.

**20.** Sheet metal plate according to any of claims 1 to 19, **characterised in that** the surface fraction occupied by said reliefs is at least equal to 5%, more preferably greater than 30%.

**21.** Sheet metal plate according to any of claims 1 to 20, intended for the creating of floorings over which trucks are to run according to a global direction (Dc) and **characterised in that** the morphology, the number and the arrangement of said reliefs are such that, by applying to said sheet metal plate the test measuring vibrations described hereinafter, the weighted level of vibration speed A ($L_{VA}$) in the frequency range 20 Hz - 5 kHz, is less than - 67.5 dB(A) if the wheel used is a thermoplastic wheel with rubber tread of a diameter of 10 cm circulating on said sheet metal plate by following said global direction (Dc),
said test of vibration measurement being carried out in the following experimental conditions:

> i) a sample of sheet metal plate is taken of which the length according to said direction (Dc) is at least equal to 30 cm;
> ii) a test bench is used comprising:
>
> > ii1) an instrumented truck comprising a flooring provided with the wheels: a rear wheel, located in the middle, in the vicinity of the rear edge of the flooring, and two front wheels, more preferably identical to the rear wheel, located in the vicinity of the front edge of the flooring, and in the vicinity of each lateral edge, said instrumented truck being loaded with 12.5 kg per wheel and comprising an accelerometer mounted on a support of the axis of the rear wheel;
> > ii2) a sample holder, able to receive said sample of sheet metal plate and to maintain it firmly, while surrounding a long track of at least 30 cm which has the upper face provided with reliefs at the passage of said rear wheel;
> > ii3) two smooth lateral tracks that surround said sample holder and which are intended for the passage of the front wheels at the same altitude as the rear wheel;
>
> iii) the truck is set into motion in such a way that, as soon as the rear wheel arrives on said strip of a piece of sheet metal plate, the truck is imparted with a speed of about 1 m/s,
> iv) during the entire crossing of the rear wheel over said track, as a time signal is recorded the acceleration measured by said accelerometer, a frequency analysis is carried out of said time signal and the weighted level of vibration speed A ($L_{VA}$) is calculated in the frequency range [$f_1$-$f_2$], said weighted level of vibration speed A
>
> being given by the formula: $Lv_A = 10 \log_{10} \left[ \int_{f_2}^{f_1} \frac{V(f)^2}{V_0^2} \, pond_A(f)^2 \, df \right]$ where $V_0$ is the reference
>
> speed equal to 1 m/s, V(f) is the spectrum of the vibration speed obtained from the recording of the time signal of the acceleration and $pond_A$(f) is the frequency weighting curve A defined in the standard EN61672-1.

**22.** Sheet metal plate according to claim 21 **characterised in that** the morphology, the number and the arrangement of said reliefs are such that, by applying to said sheet metal plate said test measuring vibration, the weighted level of vibration speed A ($L_{VA}$) in the frequency range 20 Hz - 5 kHz is less than - 68.0 dB(A), more preferably - 69.0 dB(A), if the wheel is a thermoplastic wheel with rubber tread of diameter 100 mm which circulates on said sheet metal plate by following said global direction (Dc).

**23.** Sheet metal plate according to claim 21 or 22 **characterised in that** the morphology, the number and the arrangement of said reliefs are such that, by applying to said sheet metal plate said test measuring vibration, the weighted level of vibration speed A ($L_{VA}$) in the frequency range 20 Hz - 5 kHz obtained on a thermoplastic wheel with rubber tread of diameter 100 mm that circulates on said sheet metal plate by following a direction perpendicular to said global direction (Dc), is greater than the weighted level of vibration speed A in the same frequency range, obtained when the wheel circulates following the direction (Dc).

**24.** Use of a sheet metal plate according to any of claims 1 to 23 for creating floorings over which trucks are to run according to a global direction (Dc) of circulation, **characterised in that** the said aligned groups have reliefs of which the centres of gravity are substantially aligned according to a given straight line (D) substantially parallel to said global direction (Dc) of circulation.

**25.** Use of a rolled sheet metal plate with reliefs made of aluminium alloy according to any of claims 7 to 23 in order to create floorings for a refrigerated vehicle, **characterised in that** said aligned groups of reliefs are aligned according to the direction of rolling (L) and **in that** said sheet metal plate with reliefs is placed on the flooring of the vehicle in such a way that the direction of rolling (L) coincides with the length of the vehicle.

**26.** Engraved cylinder used in rolling with a final pass **characterised in that** it comprises engraved cavities that make it possible to obtain the reliefs of the sheet metal plate according to any of claims 7 to 23.

**Figure 1a**

**Figure 1b**

**Figure 1c**

**Figure 2a**

**Figure 2b**

8.4

1.55

2.8

1.25

1.55

8.4

1.25

1.25

1.55

1.25

4.8

1.25

1.55

0.5

2.65

**Figure 3 (art antérieur)**

10

2.8

25

3

3

12

2

3

0.5

2.65

4.8

2

26

25

(L)

**Figure 4**

**Figure 5**

**Figure 6**

**Figure 7**

**Figure 8**

**Figure 9**

**EP 2 552 612 B1**

## RÉFÉRENCES CITÉES DANS LA DESCRIPTION

**Documents brevets cités dans la description**

- FR 2747948